# EUROPÄISCHE PATENTSCHRIFT

(11) **EP 4 270 282 B1**
(45) Veröffentlichungstag und Bekanntmachung des Hinweises auf die Patenterteilung: **01.04.2026**
(21) Anmeldenummer: 23170729.0
(22) Anmeldetag: 28.04.2023
(51) Int. Cl.: G06Q 10/0631, G06Q 10/08

(54) **SYSTEM UND VERFAHREN ZUR STEUERUNG VON AUFTRÄGEN**
SYSTEM AND METHOD FOR CONTROLLING ORDERS
SYSTÈME ET PROCÉDÉ DE COMMANDE DE COMMANDES

(30) Priorität: 28.04.2022 DE 102022110342; 07.06.2022 DE 102022114233
(43) Veröffentlichungstag der Anmeldung: 01.11.2023
(73) Patentinhaber: SNAG TAL GmbH, 32051 Herford (DE)
(72) Erfinder: Leimbrock, Thomas, 32130 Enger (DE); Pilgrim, Lars, 32049 Herford (DE)
(74) Vertreter: BSB Patentanwälte Schütte & Engelen Partnerschaft mbB

(56) Entgegenhaltungen:
- CA-C- 2 594 639
- DE-A1- 102018 215 873
- US-A1- 2006 282 345

## Beschreibung

Die vorliegende Erfindung betrifft ein System zur Organisation und Unterstützung für Unternehmen insbesondere der Möbelbranche bei der Bearbeitung von Aufträgen und zugehörigen Maßnahmen betreffend den Aufbau, Lieferung und den Service von Möbelstrukturen. Insbesondere ist das erfindungsgemäße System für den Einsatz bei Unternehmen der Möbelbranche und bei Unternehmen im Bereich der Küchenbranche vorgesehen.

Die CA 2 594 639 C offenbart ein System und ein Verfahren zur Planung des Bauens von Immobilien. Die US 2006/282345 A1 offenbart ein System und ein Verfahren zum Betreiben von Einzel- und Großhandelsgeschäften. Die DE 10 2018 215 873 A1 offenbart ein Auftrags- und Materialbestands-Verwaltungssystem mit zwei betätigbaren Aufbewahrungsvorrichtungen in einem Fahrzeug.

In der Möbelbranche und insbesondere in der Küchenbranche kommen Kunden oftmals in ein spezialisiertes Möbelstudio bzw. in ein Küchenstudio, um sich zum Beispiel über eine neue Küche beraten zu lassen. Bei einer Bestellung einer neuen Küchenzeile sind komplexe Aufbauten und Zusammenhänge bei den unterschiedlichen Komponenten möglich. So können z. B. unterschiedlich breite Unter- und Oberschränke und auch Hochschränke miteinander kombiniert werden. Es gibt unterschiedlichste Aufbauten der einzelnen Schränke und Schrankkomponenten. Komponenten können z. B. mit Auszügen oder Schubkästen, Drehtüren und/oder Schiebetüren ausgerüstet werden. Unterschiedlichste Elektrogeräte und/oder Einbauten sowie Zubehör wie Beleuchtung und Müllsysteme können integriert werden. Hinzu kommt, dass Anbauteile, Seitenwangen, Griffe, Zubehörteile und dgl. mehr in unterschiedlicher hinsichtlich Form, Farbe und Materialität ausgewählt werden können. Ebenso können unterschiedlichste Frontfarben, Farben, Materialien und Oberflächenausführungen für Schränke, Fronten, Anbauteile und Zubehör und Oberflächenausführungen zum Einsatz kommen.

Oftmals verwendet ein Küchenplaner eine besondere Software, um die angebotene komplexe Möbelstruktur auch visuell im Rechner darstellen zu können, damit der Kunde sich ein Bild machen kann. Kommt es zu einem Auftrag, wird häufig der Auftrag bei größeren Unternehmen in das Warenwirtschaftssystem des Küchenstudios integriert und es wird über eine Händler-Hersteller-Kopplung eine Bestellung der Möbelstruktur z.B. im vereinheitlichten Datenformat in die Wege geleitet. Eine Bestätigung des Herstellers bzw. Industriebetriebs erfolgt elektronisch oder per Post.

Wenn die Auftragsteile (z. B. Küchenteile) an den Händler geliefert werden, kann die Montage in Angriff genommen werden. Der zuständige Monteur bzw. das Serviceteam bekommen die Auftragsunterlagen bei der Montage mit. Nach der Montage erfolgt die Abnahme der Küche mit und durch den Kunden und es werden gegebenenfalls vorhandene Mängel, Beanstandungen und vom Kunden gewünschte Ergänzungen, Änderungen und Unklarheiten aufgenommen. Auf den Papierunterlagen werden entsprechende Vermerke und Kommentierungen erstellt. Inzwischen ist es auch möglich, dass auf elektronischen Geräten Aufzeichnungen und zum Beispiel Fotos von Mängeln oder Beanstandungen gespeichert werden. In jedem Fall wird nach der Rückkehr des Monteurs die Unterlage oder die elektronische Datei von einem Mitarbeiter des Küchenstudios begutachtet und bearbeitet, um anschließend bei dem Hersteller der jeweiligen Komponenten gegebenenfalls ein Ersatzteil zu beschaffen.

Es ist die Aufgabe der vorliegenden Erfindung, ein System zur Unterstützung von Unternehmen insbesondere der Möbelbranche zur Verfügung zu stellen, womit die Bearbeitung und Organisation von Aufträgen verbessert wird.

Diese Aufgabe wird gelöst durch ein System mit den Merkmalen des Anspruchs 1. Das erfindungsgemäße Verfahren ist Gegenstand des Anspruchs 14. Weitere Vorteile und Merkmale der vorliegenden Erfindung ergeben sich aus der allgemeinen Beschreibung und aus der Beschreibung der Ausführungsbeispiele.

Ein erfindungsgemäßes System ist insbesondere zur Organisation und Unterstützung von Unternehmen vorzugsweise der Möbelbranche vorgesehen und wird bei der Bearbeitung von Aufträgen und zugehörigen Maßnahmen betreffend Aufbau, Lieferung und/oder Service von insbesondere komplexen Möbelstrukturen und besonders bevorzugt von Küchenzeilen eingesetzt. Das erfindungsgemäße System eignet sich nicht nur im Bereich von Küchenzeilen, sondern kann auch bei anderen Möbelstrukturen und insbesondere bei komplexen Möbelstrukturen eingesetzt werden.

Das erfindungsgemäße System umfasst wenigstens drei Recheneinheiten, nämlich einen Zentralrechner und wenigstens einen Geschäftsstellenrechner und wenigstens einen Mobilrechner. Dabei stehen die Recheneinheiten wenigstens zeitweise über wenigstens eine Datenverbindung wenigstens zum Teil miteinander in Verbindung. Der Zentralrechner enthält eine Datenbank mit Datensätzen über Aufträge von Möbelstrukturen und zugehörigen Maßnahmen. Der Geschäftsstellenrechner ist dazu ausgebildet und eingerichtet, Auftragsdatensätze (für) bzw. Aufträge (und insbesondere zugehörige Maßnahmen) zu erstellen und gegebenenfalls zu bearbeiten, welche insbesondere im Anschluss als Datensätze in der Datenbank des Zentralrechners abgelegt werden bzw. dadurch repräsentiert werden. Dabei umfasst ein Datensatz Angaben über den Aufbau und/oder die Konfiguration und/oder die Zusammensetzung der Komponenten der Möbelstruktur.

Der Mobilrechner ist dazu ausgebildet und eingerichtet, ein Steuerprogramm auszuführen, welches Anweisungsschritte über (wenigstens einige) durchzuführende Schritte bei der Erledigung einer Maßnahme des Auftrags (insbesondere einer Serviceperson vor Ort bei dem Kunden) ausgibt und die (von der Serviceperson) zu erfassenden Daten automatisch anfordert und daraus eine Protokolldateigruppe (auf dem Mobilrechner) erstellt bzw. bearbeitet. Der Mobilrechner und der Zentralrechner sind dazu ausgebildet und eingerichtet, eine konfigurierbare Datensynchronisation (insbesondere automatisch) durchzuführen. Dabei ist der Zentralrechner dazu ausgebildet und eingerichtet, die Protokolldateigruppe automatisch auszuwerten und Bestelldaten für eine daraus abgeleitete Bestellung über ein Ersatzteil oder ein Zusatzteil zu generieren, sodass eine manuelle Erfassung von Bestelldaten an dem Geschäftsstellenrechner nicht nötig ist.

Der Zentralrechner ist dazu ausgebildet und eingerichtet, in einem konfigurierbaren Zeitabstand vor der Durchführung einer Maßnahme den wenigstens einen Servicerechner eines Herstellers zu kontaktieren und aktualisierte Auftragsinformationen abzurufen und in dem Datensatz abzulegen.

Das erfindungsgemäße System hat viele Vorteile. Ein erheblicher Vorteil des erfindungsgemäßen Systems besteht darin, dass die Protokolldateigruppe automatisch (computerimplementiert) ausgewertet wird. Dadurch werden die Angaben, Notizen und Dokumentationen des Serviceteams bzw. der Serviceperson automatisch ausgewertet und berücksichtigt. So ist es ohne Weiteres nicht mehr möglich, dass das Protokoll einer Maßnahme Stunden, Tage oder auch Wochen in Vergessenheit gerät, weil es zum Beispiel verlegt wird. Oder das Protokoll gelangt unter einen Stapel anderer Dokumente oder fällt beispielsweise hinter einen Schrank oder ein Möbelstück und gerät vorübergehend in Vergessenheit. Mit der Erfindung wird die Protokolldateigruppe von dem Zentralrechner automatisch angefordert und analysiert. Der manuelle Schritt der manuellen Erfassung ist nicht mehr nötig. Dadurch kann der Bearbeitungsprozess bei zum Beispiel einer Beanstandung grundsätzlich beschleunigt werden und in manchen Fällen ganz erheblich verkürzt werden, was für eine höhere Kundenzufriedenheit sorgt.

An dem Geschäftsstellenrechner können Datensätze in der Datenbank des Zentralrechners insbesondere bearbeitet werden und vorzugsweise können Datensätze angelegt, verändert und/oder gelöscht werden.

Insbesondere ist die Datensynchronisation zwischen dem Mobilrechner und dem Zentralrechner konfigurierbar. Das bedeutet, dass zum Beispiel Zeitabstände einer automatischen Synchronisation einstellbar sind. In bevorzugten Ausgestaltungen ist jedenfalls immer eine manuelle Datensynchronisation möglich.

Bevorzugt ist auch, dass bei bestimmten oder zuvor festgelegten Ereignissen oder zu bestimmten Uhrzeiten eine Datensynchronisation erfolgt bzw. wenigstens probiert wird. Beispielsweise kann einer Datensynchronisation automatisch erfolgen, wenn ein bekanntes Drahtlosnetzwerk erkannt wird oder wenn eine gesicherte Netzwerkverbindung besteht. Möglich ist auch eine Synchronisation zu festgelegten Zeitpunkten, zum Beispiel in jeder Nacht oder morgens und/oder abends.

Es ist möglich, dass die Datensätze in der Datenbank des Zentralrechners nicht direkt von dem Geschäftsstellenrechner aus bearbeitet werden, sondern, dass die erstellten Datensätze mit der Datenbank des Zentralrechners synchronisiert und in diesen transferiert werden.

In einer anderen offenbarten Ausgestaltung ist ein erfindungsgemäßes System insbesondere zur Organisation und Unterstützung von Unternehmen der Möbelbranche bei der Bearbeitung von Aufträgen und zugehörigen Maßnahmen betreffend den Aufbau, Lieferung und/oder den Service von insbesondere komplexen Möbelstrukturen und vorzugsweise Küchenzeilen vorgesehen.

Vorzugsweise umfasst das System wenigstens drei Recheneinheiten, nämlich einen Zentralrechner und wenigstens einen Geschäftsstellenrechner und wenigstens einen Mobilrechner, wobei die Recheneinheiten wenigstens zeitweise über wenigstens eine Datenverbindung wenigstens zum Teil miteinander in Verbindung stehen. Hier und in allen anderen Ausgestaltungen ist es möglich, dass der Zentralrechner direkt als Geschäftsstellenrechner dient: Denkbar ist es in allen Ausgestaltungen auch, dass beide Instanzen auf einem (gemeinsamen) Server ausgeführt werden.

Die Recheneinheiten stehen wenigstens zeitweise über wenigstens eine Datenverbindung wenigstens zum Teil miteinander in Verbindung. Der Zentralrechner enthält eine Datenbank mit Datensätzen über Aufträge von Möbelstrukturen und zugehörige Maßnahmen. Der Geschäftsstellenrechner ist dazu ausgebildet und eingerichtet, Auftragsdatensätze (bzw. Aufträge und zugehörige Maßnahmen) zu erstellen (und insbesondere zu bearbeiten), welche (im Anschluss) als Datensätze in der Datenbank des Zentralrechners abgelegt werden bzw. dadurch repräsentiert werden. Ein Datensatz umfasst dabei Angaben über den Aufbau und/oder die Konfiguration und/oder die Zusammensetzung der Komponenten der Möbelstruktur. Der Mobilrechner ist dazu ausgebildet und eingerichtet, ein Steuerprogramm auszuführen, welches Anweisungsschritte (bzw. einer Serviceperson oder einem Serviceteam Anweisungen) über (wenigstens einige) durchzuführende Schritte bei der Erledigung einer Maßnahme des Auftrags insbesondere vor Ort bei dem Kunden ausgibt und die (von der Serviceperson) zu erfassenden Daten automatisch anfordert und daraus eine Protokolldateigruppe erstellt. Der Mobilrechner und der Zentralrechner sind dazu ausgebildet und eingerichtet, eine konfigurierbare Datensynchronisation (insbesondere automatisch) durchzuführen. Der Zentralrechner ist dazu ausgebildet und eingerichtet, in einem konfigurierbaren Zeitabstand vor der Durchführung einer Maßnahme den wenigstens einen Servicerechner eines Herstellers (und z. B. einen externen Herstellerrechner) zu kontaktieren und aktualisierte Auftragsinformationen abzurufen und in dem Datensatz abzulegen.

Ein anderes offenbartes System dient zur Organisation und Unterstützung für Unternehmen der Möbelbranche bei der Bearbeitung von Aufträgen und zugehörigen Maßnahmen betreffend Aufbau, Lieferung und Service von (insbesondere komplexen) Möbelstrukturen, wobei das System wenigstens drei Recheneinheiten umfasst, nämlich einen Zentralrechner und wenigstens einen Geschäftsstellenrechner und wenigstens einen Mobilrechner, wobei die Recheneinheiten wenigstens zeitweise über wenigstens eine Datenverbindung wenigstens zum Teil miteinander in Verbindung stehen. Der Zentralrechner enthält eine Datenbank mit Datensätzen über Aufträge von Möbelstrukturen und zugehörige Maßnahmen. Der Geschäftsstellenrechner ist dazu ausgebildet und eingerichtet, Auftragsdatensätze (Aufträge) zu erstellen, welche als Datensätze in der Datenbank des Zentralrechners abgelegt werden und dadurch repräsentiert werden. Ein Datensatz umfasst Angaben über den Aufbau, die Konfiguration und die Zusammensetzung der Komponenten der Möbelstruktur. Der Mobilrechner ist dazu ausgebildet und eingerichtet, ein Steuerprogramm auszuführen, welches Anweisungsschritte (bzw. einer Serviceperson Anweisungen) über (wenigstens einige) durchzuführende Schritte bei der Erledigung einer Maßnahme des Auftrags ausgibt und die (von der Serviceperson) zu erfassenden Daten automatisch anfordert und daraus eine Protokolldateigruppe erstellt. Der Mobilrechner und der Zentralrechner sind dazu ausgebildet und eingerichtet, eine konfigurierbare Datensynchronisation insbesondere automatisch durchzuführen. Ein Servicerechner (wenigstens eines Herstellers von Teilen der Möbelstruktur) ist dazu ausgebildet und eingerichtet, wenigstens einmal nach der Bestellung und bei Änderungen an der Möbelstruktur den Zentralrechner zu kontaktieren und aktuelle Auftragsinformationen dem Zentralrechner zu übergeben und in dem Datensatz abzulegen.

Auch diese Systeme haben viele Vorteile. Ein erheblicher Vorteil besteht darin, dass dem Serviceteam bzw. dem Servicemitarbeiter oder der Serviceperson aktualisierte Informationen bei der Bearbeitung des Auftrags zur Verfügung gestellt werden. So ist sichergestellt, dass der Servicemitarbeiter die aktuellst möglichen Informationen bei seinem Termin zur Verfügung und insbesondere im Zugriff hat.

Beispielsweise kann es vorkommen, dass bei der Planung einer Küche oder Küchenzeile (beim Händler) der Anschlag einer Tür versehentlich falsch geplant wird. So kann es passieren, dass einzelne Türen oder einzelne Teile der Küchenzeile nicht vollständig optimal geplant sind. Dies wird regelmäßig bei dem Hersteller festgestellt, der die Planung der Möbelstruktur bzw. der Küchenzeile typischerweise noch einmal überprüft. Werden dabei solche Unzulänglichkeiten oder fehlerhafte Konfigurationen festgestellt, so werden diese regelmäßig bei dem Hersteller korrigiert. Meist wird dem Küchenstudio diese Änderung mitgeteilt. Dabei kann es aber vorkommen, dass die aktualisierte Auftragsinformationen die Serviceperson nur auf Papier oder gegebenenfalls gar nicht erreicht. Das kann vor Ort bei der Montage der Möbelstruktur zu Verzögerungen oder sogar zu Fehlern führen, die so erfindungsgemäß vermieden werden können.

Der Servicerechner kann beispielsweise ein (externer) Herstellerrechner sein oder durch einen Hersteller mit Daten und Informationen versorgt werden. Dabei ist es möglich, dass der Servicerechner automatisch mit allen Änderungen des Herstellers beaufschlagt wird, d.h. über Änderungen informiert und mit entsprechenden Daten versorgt wird. Möglich ist es auch, dass der Servicerechner bei einem (separaten und externen) Herstellerrechner automatisch oder regelmäßig Daten abruft oder automatisch bei Änderungen von einem Herstellerrechner über Änderungen informiert wird.

In bevorzugten Ausgestaltungen ist es möglich, dass ein Hersteller einen (dedizierten) Servicerechner zur Verfügung stellt, der von einem Herstellerrechner bei dem Hersteller mit den Daten zu einem Auftrag versorgt wird. Dabei kann der Servicerechner z.B. in festen oder wählbaren Abständen den Herstellerrechner kontaktieren und aktuelle oder aktualisierte Auftragsinformationen abrufen ("Pull-Verfahren"). Möglich ist es auch, dass der Herstellerrechner bei Änderungen automatisch den Servicerechner über Änderungen informiert und den Datenbestand dort aktualisiert ("Push-Verfahren").

In einfachen Fällen wird nur ein Herstellerrechner (pro Hersteller) oder ein Servicerechner verwendet, wobei der Zentralserver dann über ein Push-Verfahren oder ein Pull-Verfahren aktuelle Daten zu Datensätzen erhält. Wenn nur ein (externer) Rechner eingesetzt wird, kann dieser sowohl Herstellerrechner als auch Servicerechner genannt werden. Dann sind beide Begriffe synonym und bezeichnen eine einzelne Recheneinheit.

In bevorzugten Ausgestaltungen holt der Servicerechner Daten ("pull") von dem Hersteller und übergibt die Daten ("push") an den Zentralrechner.

Die Recheneinheiten können in allen Ausgestaltungen separate Rechengeräte sein, können aber gegebenenfalls auch virtuelle Maschinen auf einem Server sein.

In bevorzugten Ausführungen aller Ausgestaltungen ist der Zentralrechner dazu ausgebildet und eingerichtet, die Bestellung über beispielsweise ein Zusatzteil oder ein Ersatzteil automatisch (nach erfolgter Erstausführung oder Montage) abzusenden, wenn vordefinierte Kriterien erfüllt sind. Ein vordefiniertes Kriterium kann beispielsweise der Wert (oder die Bedeutung oder das Rating) der Bestellung sein. Wird zum Beispiel nur ein einzelner Griff für einen Schubkasten nachbestellt, so wird der Wertanteil dieses Griffs regelmäßig gering an der Gesamtbestellung sein, sodass eine vollautomatische Bestellung des einzelnen Griffs bei dem Hersteller die sinnvollste Lösung ist, die zudem auch viel Zeit einspart. Wird hingegen ein Backofen einer Küchenzeile oder beispielsweise ein Dampfgarer oder ein anderes Elektrogerät beanstandet, so wird regelmäßig eine Mindestsumme des Wertes überschritten werden und es ist sinnvoll, dass jemand diese Bestellung manuell kontrolliert. Weitere mögliche Kriterien sind der Typ des Kunden oder der Typ der Bestellung bzw. des Auftrags. Z. B. kann es einen Unterschied machen, ob der Auftrag hochwertig oder komplex ist.

In bevorzugten Weiterbildungen ist der Zentralrechner dazu ausgebildet und eingerichtet, eine Bestätigung anzufordern und die Bestellung nach erfolgter Bestätigung (automatisch) abzusenden. Eine solche Bestätigung kann regelmäßig manuell erfolgen und beispielsweise durch eine Bestätigung am Rechner erfolgen. Beispielsweise muss eine Checkbox gesetzt werden oder ein passender Knopf gedrückt werden oder auch ein manueller Code eingegeben werden, um die Bestätigung dann automatisch an den Servicerechner (z. B. beim Hersteller) oder (direkt an) einen Herstellerrechner oder die Herstellerrechner abzusenden.

Insbesondere ist der Zentralrechner dazu ausgebildet und eingerichtet, eine Mehrzahl unterschiedlicher Servicerechner verschiedener Hersteller oder externer Herstellerrechner zu kontaktieren und dort insbesondere Auftragsinformationen (z.B. mit der Auftragsnummer des Händlers oder des Herstellers oder auch des Endkunden) abzurufen. Eine automatische Kontaktierung mehrerer unterschiedlicher Servicerechner oder externer Herstellerrechner zur Absendung von Bestellungen und/oder zur Abholung aktualisierter Auftragsinformationen ist sehr vorteilhaft, da damit nicht nur eine Einbindung eines einzelnen Herstellers erfolgt, sondern auch unterschiedliche Hersteller eingebunden werden können.

In vorteilhaften Ausgestaltungen ist der Zentralrechner dazu ausgebildet und eingerichtet, je nach (Art und Anzahl eines) Ersatzteils oder Zusatzteils den entsprechend zugehörigen Servicerechner oder Herstellerrechner automatisch mit entsprechenden Bestelldaten zu kontaktieren. Auch hier ist wiederum eine Bestätigung möglich bzw. nötig, wenn bestimmte Kriterien überschritten werden.

Vorzugsweise umfassen die Bestelldaten Angaben über eine Anzahl, eine jeweilige Typangabe und/oder eine jeweilige Bestellnummer von Ersatzteilen und/oder Zusatzteilen. Dabei sind die Bestelldaten insbesondere aus der Protokolldateigruppe extrahiert. Beispielsweise kann die Serviceperson bei der Maßnahme ein entsprechendes Teil in dem Datensatz an dem Mobilrechner auswählen, sodass das entsprechende Teil inklusive der Bestellnummer in dem Datensatz markiert ist.

In bevorzugten Ausgestaltungen ist der Zentralrechner dazu ausgebildet und eingerichtet, automatisch eine Rückmeldung des Servicerechner oder externen Herstellerrechners (über insbesondere eine Datenverbindung) zu verarbeiten und aus der Rückmeldung Liefer-und Wiederbeschaffungszeiten und Lieferkonditionen in der zugehörigen Datenbank in den zugehörigen Datensatz zu übernehmen. Zu den abgelegten Informationen können insbesondere zusätzliche Dokumente, Aufbaupläne, Medien, Angaben über den oder die Mitarbeiter oder das Lieferfahrzeug oder Telefonverbindungen und dergleichen mehr gehören.

In vorteilhaften Weiterbildungen ist der Zentralrechner dazu ausgebildet und eingerichtet, aus der Rückmeldung des Servicerechner oder externen Herstellerrechners unter Berücksichtigung vorbestimmter Zuschlagzeiten und/oder interner Kalenderdaten und/oder Verfügbarkeitsdaten (zum Beispiel der Serviceperson oder des Serviceteams) wenigstens einen möglichen Ausführungszeitpunkt für die Maßnahme (intern) vorzuschlagen oder zu erstellen und/oder (intern und/oder extern an den Kunden) abzusenden. Dadurch wird viel Zeit eingespart, um mögliche Termine zu finden.

Vorzugsweise wird eine manuelle Bestätigung angefordert, bevor ein Vorschlag eines Ausführungszeitpunkts der Maßnahme automatisch (an den Kunden) abgesendet wird. In allen Ausgestaltungen ist es auch möglich, dass eine Bestätigung innerhalb eines vorgegebenen Zeitfensters abgegeben oder verweigert werden muss. Nach dem Überschreiten des Zeitfensters ist es möglich, dass automatisch die Bestellung und/oder der Vorschlag abgesendet wird bzw. werden.

Der Datensatz zu einem Auftrag kann Angaben über die durchzuführenden Maßnahmen umfassen. Insbesondere umfasst der Datensatz auch unterschiedlicher Maßnahmentypen bzw. es können unterschiedliche Maßnahmentypen einem Datensatz zugeordnet werden. Möglich ist es auch, dass ein Datensatz mehrere Maßnahmentypen umfasst.

Beispielsweise kann ein Datensatz zunächst auf die Neubestellung einer Möbelstruktur wie zum Beispiel einer Küchenzeile ausgerichtet sein. Nach erfolgter Montage kann sich ein Folgeauftrag ergeben, wenn beispielsweise der Kunde noch elektrische Geräte zusätzlich bestellt, oder den Umbau einzelner Komponenten wünscht. Beispielsweise könnte der Kunde anstatt einer Tür mehrere Schubkästen wünschen oder ein zusätzliches Gerät, wie beispielsweise eine Mikrowelle, bestellen.

Es ist auch möglich, dass bei der Erstbestellung oder einer Nachbestellung Beanstandungen auftreten, die zu einer entsprechenden Folgemaßnahme führen. Insbesondere sind als Maßnahmentypen wenigstens einige Maßnahmentypen wie "Montage", "Nachmontage", "Beanstandung", "Teileaustausch", "Lieferung" und "Bestellung von Zusatzteilen oder Zusatzgeräten" umfasst. Weitere Maßnahmentypen sind möglich. Dann kann anhand des Maßnahmentyps die Serviceperson direkt Rückschlüsse auf die zu erledigenden Arbeiten erhalten.

Es ist bevorzugt, dass die Serviceperson wenigstens auch auf die zuvor durchgeführten Maßnahmen dieses Auftrags zurückgreifen kann. So ergibt es natürlich Sinn, dass die Serviceperson auf die Aufbaupläne zugreifen kann, wenn eine Veränderung der Struktur einer Küchenzeile erfolgen soll. Ähnliches gilt auch für den Einbau weiterer elektrischer Geräte.

In allen Ausgestaltungen ist es bevorzugt, dass der Zentralrechner dazu ausgebildet und eingerichtet ist, ein Warnsignal oder Alarmsignal (akustisch und/oder optisch und oder als elektronische Nachricht) auszugeben, wenn der Servicerechner oder Herstellerrechner keine Rückmeldung liefert oder eine Verzögerung der Lieferung bekannt gibt. Möglich ist es auch, dass zu festgelegten Zeitpunkten bevor eine Maßnahme durchgeführt werden soll, automatisch einen Warnhinweis versendet oder ausgedruckt wird, um über die fehlende Rückmeldung oder die anstehende Verzögerung zu unterrichten.

Vorzugsweise ist der Zentralrechner dazu ausgebildet und eingerichtet, bei allen Maßnahmen Wiederbeschaffungszeiten für alle Komponenten der Möbelstruktur bei dem wenigstens einen Hersteller oder bei den mehreren Herstellern abzufragen. Das hat den Vorteil, dass eine Serviceperson bei zum Beispiel einer Erstmontage dem Kunden direkt mitteilen kann, wie lange eine Wiederbeschaffung dauert, wenn einzelne Teile oder Komponenten beanstandet werden. Bei kleineren Mängeln oder nur schwer sichtbaren Mängeln kann ja auch gegebenenfalls direkt eine Einigung erfolgen. Und wenn eine Wiederbeschaffung nötig ist, ist der Kunde direkt informiert.

Vorzugsweise ist der Zentralrechner dazu ausgebildet und eingerichtet, anhand der Protokolldateigruppe automatisch eine Maßnahme (insbesondere des Typs Serviceauftrag) zu erstellen und einzurichten.

In vorteilhaften Weiterbildungen ist der Zentralrechner dazu ausgebildet und eingerichtet, bei Einrichtung einer Maßnahme aus der Protokolldateigruppe den benötigten Hersteller zu ermitteln und den Servicerechner oder externen Herstellerrechner zu kontaktieren und aktualisierte Auftragsinformationen abzurufen (und gegebenenfalls eine Nachbestellung auszulösen).

Insbesondere umfassen die Auftragsinformationen wenigstens eine Information aus einer Gruppe von Informationen, welche Gruppe von Informationen einen Aufbauplan, Detailansichten, Stücklisten, Typangaben, Bestellnummern, Beschaffungszeiten, Logistikinformationen und gegebenenfalls Preisinformationen und Wertinformationen und möglicherweise auch Kunden Informationen umfassen.

Vorzugsweise ist der Mobilrechner einem Serviceteam mit wenigstens einer Serviceperson zugeordnet. Vorzugsweise wird der Mobilrechner regelmäßig mit dem Zentralrechner synchronisiert, um (dem Serviceteam) die zu bearbeitenden Maßnahmen der Aufträge (und insbesondere Servicemaßnahmen) zur Verfügung zu stellen und um aus einem Datensatz abgeleitete Auftragsinformationen auf dem Mobilrechner zur Verfügung zu stellen und darauf erstellte Protokolldateigruppen herunterzuladen. Eine Protokolldateigruppe kann eine einzelne Datei sein, kann aber auch mehrere Dateien oder Dateigruppen umfassen. Insbesondere kann eine Protokolldateigruppe Textdateien, Bedienungsanleitungen, Aufbaudateien, Pläne, Audiodateien, Bilddateien und Videodateien und dergleichen mehr umfassen.

Vorzugsweise ist der Mobilrechner dazu ausgebildet und eingerichtet, bei einer Maßnahme eine Anfertigung akustischer und/oder optischer Daten und/oder Videodaten anzufragen, um diese in der Protokolldateigruppe der Maßnahme zu speichern. So können beispielsweise Beanstandungen und/oder Defekte und/oder Fehlstellen oder Besonderheiten an einer Möbelstruktur dokumentiert und in der Protokolldateigruppe festgehalten werden.

In vorteilhaften Ausgestaltungen ist der Mobilrechner dazu ausgebildet und eingerichtet, eine Checkliste auszugeben und Eingaben einzufordern. Dabei ist es vorzugsweise möglich, unterschiedlich komplexe Checklisten auszugeben. Insbesondere ist eine Komplexität einer ausgewählten Checkliste abhängig von Daten des Auftrags. Insbesondere kann der Typ einer Checkliste bzw. die Komplexität einer Checkliste von dem Serviceteam oder dessen Mitgliedern oder von einem Wert einer Maßnahme und/oder einer Kategorie des Kunden und/oder einer Kategorie des Auftrags abhängen. Bei Aufträgen mit hohem Wert, bei wichtigen Kunden und dergleichen mehr kann es sinnvoll sein, eine komplexere Checkliste auszugeben. Gleiches gilt, wenn beispielsweise die allererste Küchenzeile eines größeren Objekts oder Wohnblocks abgenommen wird, um das Serviceteam dort entsprechend zu sensibilisieren und Folgefehler zu minimieren.

In vorteilhaften Ausgestaltungen steht der Geschäftsstellenrechner mit einem Verwaltungsrechner in Datenverbindung, der dazu ausgebildet und eingerichtet ist, eine Datenbank mit einer Auftragsverwaltung mit Datensätzen mit Aufträgen zur Verfügung zu stellen, die mit dem Geschäftsstellenrechner bearbeitbar sind. Insbesondere stellt der Verwaltungsrechner eine gegebenenfalls ähnliche, aber jedenfalls andere Datenbank zu Verfügung, in der zum Teil gleiche aber zum Teil auch andere Informationen abgelegt werden können wie in der Datenbank des Zentralrechners.

Der Verwaltungsrechner kann ein Warenwirtschaftssystem zur Verfügung stellen, welches zur Erstbestellung und zur Abrechnung und zur Verwaltung von Kundendaten dient. Der Zentralrechner hingegen bündelt Daten und Datensätze, die konkret mit der Abwicklung des Auftrags zusammenhängen. In besonderen Ausgestaltungen kann der Geschäftsstellenrechner die Funktion des Verwaltungsrechners übernehmen und stellt auch ein Warenwirtschaftssystem oder dergleichen zu Verfügung. Dann können Aufträge grundsätzlich auch auf dem Zentralrechner erstellt und direkt dort gespeichert werden.

In Ausgestaltungen, bei denen ein Verwaltungsrechner eingesetzt wird, ist der Verwaltungsrechner insbesondere dazu ausgebildet und eingerichtet, einen Datensatz der Datenbank auszuwerten und einen Servicerechner oder Herstellerrechner zu kontaktieren und dem Servicerechner oder Herstellerrechner eine Bestellung zu übermitteln und Informationen über die Lieferung wie zum Beispiel einen Liefertermin anzufragen. Das erfolgt insbesondere bei der Erstaufnahme eines Auftrags über beispielsweise eine neue Küchenzeile oder eine neue Möbelstruktur.

Vorzugsweise sind der Zentralrechner und der Verwaltungsrechner dazu ausgebildet und eingerichtet, automatisch Datensätze wenigstens zum Teil zu synchronisieren. Das kann bedeuten, dass alle Informationen synchronisiert werden. Es ist aber auch möglich und es ist bevorzugt, dass nur die Teile der Datensätze bzw. der Teil der Daten synchronisiert wird, der auf dem Zentralrechner benötigt wird.

Wenn kein Verwaltungsrechner vorgesehen ist, holt der Geschäftsstellenrechner vorzugsweise Datensätze direkt von dem Zentralrechner und bearbeitet diese und speichert sie dort oder erstellt sie.

Ein anderes offenbartes System dient zur Organisation und Unterstützung für Unternehmen der Möbelbranche bei der Bearbeitung von Aufträgen und zugehörigen Maßnahmen betreffend Aufbau, Lieferung und Service von (insbesondere komplexen) Möbelstrukturen, wobei das System mehrere Recheneinheiten umfasst, nämlich einen Zentralrechner und wenigstens einen Mobilrechner, wobei die Recheneinheiten wenigstens zeitweise über wenigstens eine Datenverbindung wenigstens zum Teil miteinander in Verbindung stehen. Der Zentralrechner enthält eine Datenbank mit Datensätzen über Aufträge von Möbelstrukturen und zugehörige Maßnahmen, wobei ein Datensatz Angaben über den Aufbau, die Konfiguration und die Zusammensetzung der Komponenten der Möbelstruktur umfasst. Der Mobilrechner ist dazu ausgebildet und eingerichtet, eine Oberflächenstruktur an einem Lieferumfang der Möbelstruktur zu erkennen und zugeordnete zusätzliche Daten über die Möbelstruktur und deren Bestandteile aktuell von einem Servicerechner oder Herstellerrechner abzurufen.

Die Oberflächenstruktur kann ein zweidimensionales oder dreidimensionales Oberflächenmuster an der Möbelstruktur oder einem Teil oder einem zugehörigen Teil der Lieferung ausgebildet sein. So z.B. an einem Möbelteil oder auch an der Montageanleitung oder an Lieferpapieren. Z.B. kann ein Muster aufgedruckt sein, welches mit dem Mobilrechner gescannt wird. Die Oberflächenstruktur kann eine Internetadresse definieren oder wiedergeben. In einfachen Fällen kann eine konkrete Internetadresse in Buchstaben angegeben sein und auf den konkreten Auftrag hindeuten. Es ist besonders bevorzugt, dass die Oberflächenstruktur einen QR-Code oder wenigstens einen QR-Code umfasst oder als ein solcher ausgebildet ist. Die Oberflächenstruktur kann als mechanisches Identifikationsobjekt ausgebildet sein, also als ein mechanisches Identifikationsobjekt. Die Oberflächenstruktur kann direkt zu einer Webseite und insbesondere direkt zu den aktuellen Auftragsdaten auf einer Webseite verweisen und zu einem Datensatz einer (Internet-) Datenbank oder der "Cloud" des Herstellers oder des Händlers verweisen. Darüber kann die Bedienperson oder der Monteur aktuellste Informationen und Daten über die Struktur, die Montage und die Komponenten der Möbelstrukturen erhalten.

In allen Ausgestaltungen, Weiterbildungen und Konfigurationen kann das System bei der Bearbeitung von Aufträgen über Möbelstrukturen jeglicher Art verwendet werden. Es können Küchenzeilen und Küchenkomponenten, Polstermöbel, Wohnzimmermöbel, Schlafmöbel, Kleiderschränke und andere Möbel aus dem Wohn- und Arbeitsumfeld konfiguriert und/oder bearbeitet werden. Bei Polstermöbeln können z. B. Produktkonfigurationen und Produktkonfiguratoren wichtig sein.

Das erfindungsgemäße Verfahren wird unter Verwendung eines erfindungsgemäßen Systems durchgeführt und dient zum Bearbeiten und zur Organisation und Unterstützung von Unternehmen insbesondere des Möbelhandels. Es wird bei der Bearbeitung von Aufträgen und den zugehörigen Maßnahmen wie einem Aufbau, der Lieferung und/oder dem Service von (komplexen) Möbelstrukturen eingesetzt. Dabei wird ein Auftrag beispielsweise erstellt und das Serviceteam bzw. eine Serviceperson nimmt zur Bearbeitung der Maßnahme den Mobilrechner mit und dokumentiert die Maßnahme an dem Mobilrechner, auf dem eine Protokolldateigruppe erstellt wird. Dabei kann direkt ein Ersatzteil oder ein Zusatzteil notiert und als Bestellung in der Protokolldateigruppe abgelegt werden. Der Zentralrechner kontaktiert in einem konfigurierbaren Zeitabstand vor der Durchführung einer Maßnahme den wenigstens einen Servicerechner eines Herstellers und ruft aktualisierte Auftragsinformationen ab und legt diese in dem Datensatz ab.

Weitere Vorteile und Merkmale der vorliegenden Erfindung ergeben sich aus den Ausführungsbeispielen, welche mit Bezug auf die beiliegenden Figuren im Folgenden erläutert werden.

In den Figuren zeigen:
- Figur 1: eine stark schematische Übersicht über ein erfindungsgemäßes System;
- Figur 2: ein anderes erfindungsgemäßes System; und
- Figur 3: noch ein erfindungsgemäßes System.

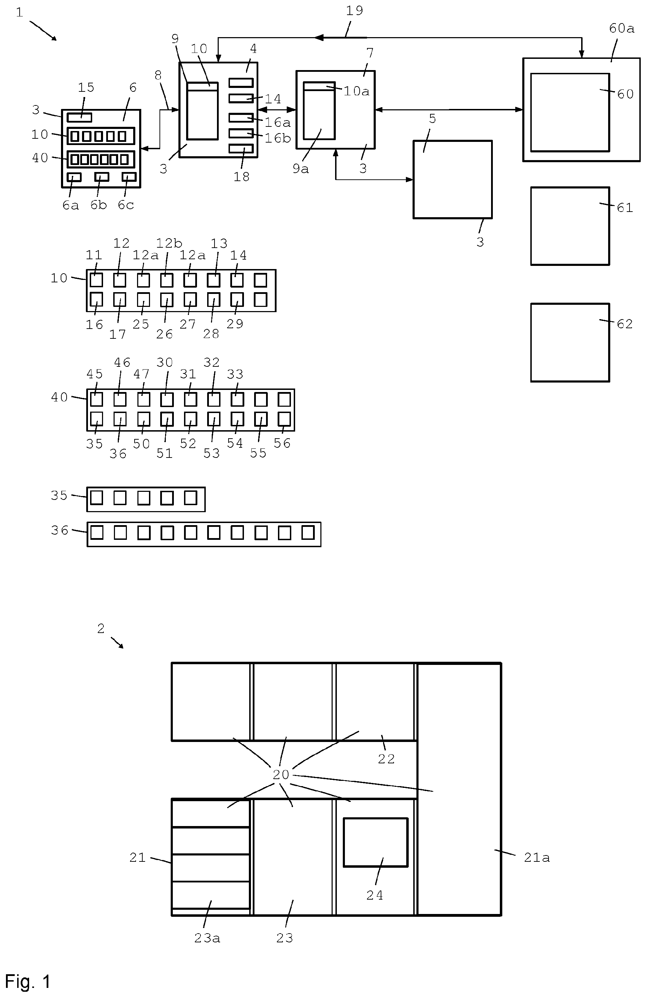

Das in Figur 1 in einer stark schematischen Übersicht dargestellte erfindungsgemäße System 1 dient zur Organisation und Unterstützung von Unternehmen der Möbelbranche bei der Bearbeitung von Aufträgen und zugehörigen Maßnahmen wie zum Beispiel dem Aufbau, der Lieferung und/oder dem Service von Möbelstrukturen 2. Beispielsweise kann es bei der Bestellung, Montage und einer Wartung der im unteren Teil von Figur 1 rein schematisch abgebildeten Küchenzeile eingesetzt werden. Möglich ist der Einsatz auch mit anderen Möbeln, wie z.B. bei Sitzmöbelstrukturen oder Schlafmöbelstrukturen.

Die hier in Figur 1 als Küchenzeile 2 ausgebildete Möbelstruktur umfasst mehrere Komponenten 20 und hier zum Beispiel einige Unterschränke 21 und Oberschränke 22 und hier einen Hochschrank 21a, wobei wie Unterschränke 21 und Oberschränke 22 jeweils beispielsweise über Türen 23 verfügen können. Möglich ist auch der Einsatz von Auszügen, Schubkästen 23a, Klappen, Schiebelementen oder anderen Öffnungsmöglichkeiten. In einem Unterschrank ist hier beispielsweise ein Backofen 24 als elektrisches Gerät sichtbar. Weitere elektrische Geräte wie ein Kochfeld, ein Dampfgarer, eine Spülmaschine oder ein Kühlschrank und/oder ein Gefrierschrank und dergleichen Geräte mehr können vorgesehen sein.

Die Küchenzeile bildet hier eine komplexe Möbelstruktur 2, bei der nicht nur die Anordnung und Reihenfolge der verschiedenen Komponenten unterschiedlich sein kann, sondern bei der auch unterschiedlichste Oberflächen, Materialien, Bauteile, Griffe und auch Qualitäten ausgewählt werden können, die das Aussehen und auch den Preis der Möbelstruktur 2 beeinflussen.

Meist kaufen Kunden solche Möbelstrukturen 2 in spezialisierten Unternehmen der Möbelbranche, wo sie eine fachlich fundierte Beratung erhalten. Meist ist der Anteil der Selbstmontagen, die der Endkunde durchführt, aufgrund der Komplexität gering. Zur Unterstützung des Verkaufs und auch zur späteren Unterstützung bei der Lieferung, Montage und der Nachbarbereitung und der Versorgung der Kunden dient das erfindungsgemäße System 1, welches mehrere Recheneinheiten 3 umfasst. Hier ist ein Verwaltungsrechner 7, auf dem eine Datenbanken 9a mit Datensätzen 10a vorhanden ist, umfasst. Die Datensätze 10a der Datenbank 9a werden hier von einem Geschäftsstellenrechner 5 erstellt und bearbeitet, der beispielsweise von einem Verkäufer in einem Küchenstudio eingesetzt wird, während der Verkäufer den Kunden bedient.

Wenn sich der Kunde und der Verkäufer einigen, schreibt der Verkäufer den Datensatz 10a fest und es wird eine Bestellung ausgelöst, die über eine Datenverbindung 8 mit dem Servicerechner oder Herstellerrechner 60 des Herstellers 60a (oder der Hersteller) kommuniziert. Der Servicerechner (des Herstellers) oder der Herstellerrechner 60 bestätigt diese Bestellung und liefert Informationen über den Lieferzeitpunkt und die Lieferkonditionen etc. zurück. In entsprechender Weise können auch andere Servicerechner oder Herstellerrechner 61 und 62 anderer Hersteller involviert werden.

Des weiteren ist ein Zentralrechner 4 vorgesehen, auf dem eine Datenbank 9 installiert ist, die Datensätze 10 enthält. Die Datensätze 10 in der Datenbank 9 werden mit dem Verwaltungsrechner 7 in regelmäßigen Abständen synchronisiert. Dabei müssen nicht alle Informationen aus der Datenbank 9a des Verwaltungsrechners 7 in den Zentralrechner 4 überführt werden. Es werden aber jedenfalls die für die Durchführung der Maßnahme erforderlichen Daten in den Zentralrechner 4 überführt.

Die Daten eines Datensatzes 10 oder mehrere Datensätze werden regelmäßig zum Beispiel jede Nacht oder einmal die Woche oder in anderen Abständen mit einem Mobilrechner 6 synchronisiert. Der Mobilrechner 6 wird von dem Serviceteam bzw. der relevanten Serviceperson verwendet und beispielsweise zur Montage der bestellten Möbelstruktur 2 mitgenommen. Deshalb wird auf das mobile Gerät 6 der Datensatz 10 mit den benötigten Informationen transferiert. So kann der Datensatz 10 Daten über den Auftrag 11, die durchzuführende Maßnahme 12, das Lieferdatum 12a, die Lieferkonditionen 12b oder ergänzende Maßnahmen 13 umfassen. In dem Datensatz 10 auf dem Mobilgerät 6 wird der Ausführungszeitpunkt 16 für die Maßnahme 12 bzw. 13 und der dazugehörige Maßnahmentyp 17 abgelegt.

Der Mobilrechner 6 kann z. B. ein tragbarer Rechner oder ein Tabletrechner oder ein Smartphone sein und verfügt regelmäßig über eine Kamera 6a, ein Mikrofon 6b und einen Eingabebereich 6c. Der Eingabebereich 6c kann eine (physikalische oder virtuelle) Tastatur und/oder einen Touchscreen oder dergleichen umfassen.

Es ist bevorzugt, dass vor der Durchführung einer Maßnahme 12 oder 13 der Zentralrechner 4 den Servicerechner oder den Herstellerrechner 60 kontaktiert und aktualisierte Auftragsinformationen 26 abfragt und um eine entsprechende Rückmeldung 19 bittet. Bei der Rückmeldung 19 werden die aktualisierten Auftragsinformationen 26 in der Datenbank 9 des Zentralrechners 4 abgelegt.

Dann kann rechtzeitig vor dem Ausführungszeitpunkt 16 eine Aktualisierung/Synchronisierung des Mobilrechners 6 erfolgen. Dadurch erhält das Servicepersonal vor der Durchführung einer Maßnahme 12 oder 13 gegebenenfalls Angaben über aktuelle Beschaffungszeiten oder Wiederbeschaffungszeiten 25 sowie aktualisierte Auftragsinformationen 26, einen aktualisierten Aufbauplan 27, Detailansichten 28 und weitere Informationen, die für die Durchführung der Maßnahmen 12 oder 13 erforderlich, sinnvoll oder hilfreich sind.

Die Zurverfügungstellung von aktualisierten Beschaffungszeiten oder Wiederbeschaffungszeiten 25 ist hilfreich, da bei Beanstandung einzelner Teile oder Komponenten dem Kunden direkt realistische Angaben über die benötigte Zeitdauer gemacht werden können. Das gleiche gilt beispielsweise für die Beschaffung von Zusatzgeräten wie elektrischen Geräten oder gegebenenfalls den Umbau oder die Erweiterung der Möbelstruktur 2.

In dem Mobilrechner 6 wird jedenfalls auch eine Protokolldateigruppe 40 für die durchzuführende Maßnahme bzw. den Auftrag 11 zur Verfügung gestellt oder eine solche Protokolldateigruppe wird während der Bearbeitung durch das Steuerprogramm 15 automatisch erstellt. Dabei werden in der Protokolldateigruppe 40 Informationen über das Serviceteam 45 und die Servicepersonen 46, 47 abgelegt bzw. sind von vornherein darin enthalten.

In der Protokolldateigruppe 40 können Daten 30, Bild- und Videodateien 31, Audiodateien 32 und Dokumente sowie Unterschriften 33 abgelegt werden. Des weiteren enthält die Protokolldateigruppe 40 wenigstens eine Checkliste 35, 36 und Angaben über die Bestellung oder eine gegebenenfalls weitere Bestellung 50, über Ersatzteile 51 und Zusatzteile 52 und sich daraus ergebende Bestelldaten 53 sowie deren Anzahl 54 und Typangaben 55 sowie die passenden Bestellnummern 56.

Wird während der Durchführung einer Maßnahme wie zum Beispiel dem Aufbau der Küchenzeile gemäß der Möbelstruktur 2 beispielsweise die Front einer Tür 23 beanstandet, so kann die Serviceperson 46 oder 47 indirekt in die Auftragsdaten 11 hineinschauen und anhand der Stücklisten die beanstandete Tür 23 eindeutig identifizieren und auswählen und praktisch unmittelbar eine neue Bestellung bzw. Nachbestellung auslösen.

Rechtzeitig vor dem Servicetermin wird dem Mobilrechner 6 ein Datensatz 10 zur Verfügung gestellt, der kurz vor dem Ausführungszeitpunkt 16 aktualisiert wurde und alle Aktualisierungen und Updates und gegebenenfalls Veränderungen beinhaltet. Das ist für das Serviceteam sehr vorteilhaft und verhindert Verzögerungen und Fehler bei der Montage.

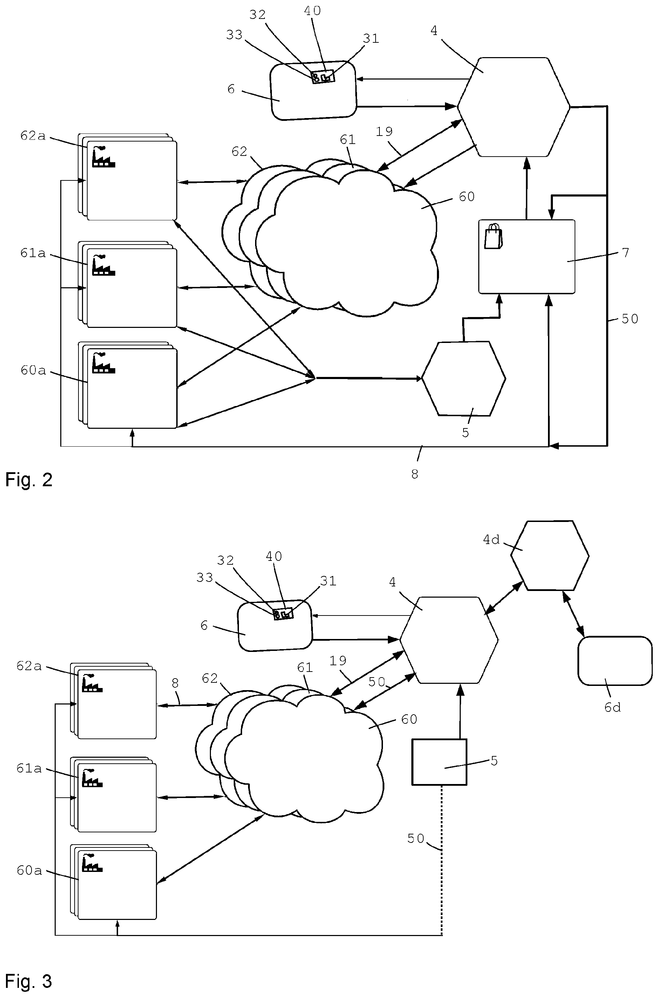

In Figur 2 ist ein leicht verändertes System 1 schematisch abgebildet, bei dem wiederum verschiedene Hersteller 60a, 61a und 62a entsprechende Servicerechner oder Herstellerrechner 60, 61 und 62 betreiben, auf die hier zum Beispiel von dem Zentralrechner 4 zur Aktualisierung der Daten zugegriffen werden kann.

Auch hier wird über einen Geschäftsstellenrechner 5, der mit einem Verwaltungsrechner 7 verbunden ist, ein Angebot erstellt und nach der Zustimmung des Kunden an die einzelnen Servicerechner oder Herstellerrechner geschickt.

Dabei verwendet der Mitarbeiter in dem Möbelstudio eine Planung-, Design-, Erfassung- und Angebotssoftware oder Ähnliches und erarbeitet eine Möbelstruktur 2, die anschließend über ein spezielles Datenformat repräsentiert wird, welches der Industrie bekannt ist. Die Datei mit dem Standard- Datenformat wird an die entsprechenden Hersteller abgeschickt. Die Hersteller überprüfen mit ihren Überprüfungs- und Kontrollmechanismen die jeweilige Funktion und ändern gegebenenfalls z. B. noch die Anschlagrichtung einzelner Türen oder dergleichen, wenn dies ansonsten zu Konflikten führen würde.

Die Hersteller speichern die entsprechend modifizierten Daten in dem jeweiligen Servicerechner oder Herstellerrechner 60-62, von wo sie von dem Zentralrechner 4 in aktualisierter Form abgeholt werden.

Der Zentralrechner 4 aktualisiert die entsprechenden Daten auch kurz vor dem Ausführungszeitpunkt 16, um die aktuellsten Daten auf dem Mobilrechner 6 für die Montage zur Verfügung zu stellen.

Während der Montage können auf dem Mobilrechner 6 zum Beispiel Audiodateien 32, Videodateien, Bilddateien 31 und Unterschriften 33 in passenden Dateiformaten abgelegt werden, sodass der Montagevorgang mit dem Mobilrechner 6 dokumentiert wird. Wenn sich bei der Montage eine Ergänzung oder Änderung oder durch eine Beanstandung eine neue Maßnahme ergibt, wird diese über die Synchronisation des Mobilrechners 6 mit dem Zentralrechner 4 in den Zentralrechner hinein transferiert, wo der Zentralrechner 4 die Protokolldateigruppe 40 auswertet und anhand der darin enthaltenen Daten erkennt, dass eine Neubestellung oder Ersatzteilbestellung einzelner Ersatzteile 51 oder Zusatzteile 52 erforderlich ist. Dabei kann eine automatische Bestellung an die Servicerechner oder Herstellerrechner erfolgen oder es wird eine manuelle Bestätigung durch eine Person an dem Geschäftsstellenrechner 5 verlangt, um die Bestellung 50 anschließend an die entsprechenden Hersteller zu senden.

In Figur 3 ist ein weiteres System 1 schematisch abgebildet, bei dem im Unterschied zum Ausführungsbeispiel nach Figur 2 kein spezieller Verwaltungsrechner 7 vorgesehen ist. Der Geschäftsstellenrechner 5 ist direkt mit dem Zentralrechner 4 verbunden, auf dem dann praktisch auch das Warenwirtschaftssystem gespeichert und abgelegt ist. Abgesehen von dieser Änderung ist die Funktionsweise im Prinzip gleich wie bei dem Ausführungsbeispiel nach Figur 1 und dem Ausführungsbeispiel nach Figur 2.

Die (Erst-) Bestellung 50 könnte von der Recheneinheit 5 direkt (über die gestrichelte Linie) zu den Herstellern 60a, 61a und 62a erfolgen. Möglich und bevorzugt ist eine direkte Abwicklung von der Recheneinheit 5 über den Zentralrechner 4 und dann zu den Servicerechner oder Herstellerrechnern 60 bis 62.

Zusätzlich ist noch eine ergänzende Maßnahme dargestellt, die in allen Ausführungsbeispielen eingesetzt werden kann. Dazu wird der Zentralrechner 4 mit einem Internetangebot oder Webservice 4d verbunden, auf das ein Kunde mit einem Mobilgerät 6d oder einem Rechner oder dergleichen im Internet zugreifen kann. Der Kunde erhält beispielsweise einen speziellen Zugang oder wird für E-Mail oder dergleichen kontaktiert, wenn es für den Kunden attraktive Zusatzangebote als Erweiterung oder Ergänzung des Systems eingestellt werden oder vorhanden sind. Das erweitert die Betreuung von Kunden ohne großen Aufwand.

Die Erfindung trägt zu der Automatisierung und Digitalisierung der Möbelbranche durch die Kopplung und Integration von Daten und Geräten bei. Ein Ausgangspunkt ist es, die in der Küchenbranche handschriftlich erstellten Abnahmeprotokolle zu digitalisieren. Zusätzlich können die Daten des Handels auftragsbezogen mit denen der Küchenhersteller ergänzt werden, so dass benötigte Artikel von dem Erfasser (der Serviceperson bzw. dem Monteur) vom Ort des Bedarfes (beim Endkunden) nahezu in Echtzeit bei dem Küchenhersteller bestellt werden, ohne viele übliche zeitraubende und fehlerbehaftete Zwischenschritte bei dem Händler und bei der Industrie.

Die Erfindung stellt ein vorteilhaftes System zur Verfügung. Grundsätzlich wird es schon bei der Erstauftragsbestellung zur Händler-Hersteller-Kopplung genutzt. Die Bestellung der Möbelstruktur 2 und z. B. einer Küchenzeile kann im vereinheitlichten Datenformat EDI erfolgen, die Bestätigung der Hersteller 60a, 61a, 62a kann auf gleichem (Rück-) Wege erfolgen.

Die Stammdaten verschiedener Hersteller 60a, 61a, 62a können neben ganzen Artikeln auch einzelne Bauteile, Baugruppen sowie einzelne Ersatzteile 51 erfassen. Dies auch in der Konfiguration, wie es im Erstauftrag der Fall ist. Das heißt, dass ein Bauteil für den Fall eines notwendigen Austausches wiederbelebt werden kann.

Über Schnittstellen können aus den Systemen von Handel und Industrie definierte Daten übernommen und integriert werden, um eine neue Datenkombination zu erzeugen.

Die Auftragsdaten des Händlers werden zu einem Herstellrechner 60, 61, 62 hochgeladen. Der Herstellrechner 60, 61, 62 liefert mittels einer Schnittstelle auftragsbezogen relevante Daten des Herstellers, wie z. B. Baugruppen, Montagehinweise, Skizzen, Produktinformationen etc. Die Daten des Händlers und des Herstellers werden auf dem Zentralrechner 4 ("Datendrehscheibe") vereint.

Der benötigte Datensatz 10 für die Maßnahme des Auftrags wird dem Serviceteam (Monteur) auf den Mobilrechner 6 (z. B. ein Tabletrechner) übertragen. Bei der Montage wird das Steuerprogramm 15 gestartet und es werden einzelne Schritte dokumentiert. Dazu fordert das Steuerprogramm 15 die Eingabe von Daten an. Das Ergebnis der Montageabnahme fließt als Protokolldateigruppe 40 bei Rückkehr des Monteurs nach Synchronisation (über die Schnittstellen) in den Zentralrechner 4 zurück. Dort wird die Protokolldateigruppe 40 automatisch analysiert. Es ist möglich, dass automatisch z.B. Buchungen, Bestellungen und/oder das Versenden von Informationen an interne Stellen oder an externe Dritte ausgelöst werden. Für die Industrie werden die bestehenden Schnittstellen und insbesondere ein übliches EDI-Datenformat (z. B. IDM) verwendet, so dass die Bestellungen umgehend eingelastet und produziert werden können. Gegebenenfalls kann die Synchronisation des Mobilrechners 6 mit dem Zentralrechner 4 nahezu unmittelbar und automatisch die Neuproduktion von Ersatzteilen wie z. B. einer Tür oder einer Front oder die Nachbestellung von Ersatzteilen wie z.B. von Griffen veranlassen.

Bei einer typischen Montage führt der Monteur nach Abschluss der Tätigkeit die Abnahme der Leistung mit dem Kunden durch. Dazu werden derzeit vorgefertigte Protokolle, teilweise mit Durchschlagspapier, oder Memo- oder Notiz-Apps eingesetzt. In Einzelfällen wird proprietäre Software eingesetzt. Durch in der Regel händische Übergabe der Abnahme-Dokumente bekommt der Händler die Angaben des Monteurs. Dateien werden entweder gemailt oder manuell vor Ort übertragen. Der Händler bestellt die notwendigen Teile anschließend manuell bei dem jeweiligen Hersteller. Dazu werden die vom Monteur erfassten Informationen händisch abgetippt. Die Übermittlung erfolgt über eine E-Mail mit einem angehängten Dokument, selten noch per Fax, oder über Warenwirtschaftssysteme mittels automatisierter Dokumenterstellung und Übertragung.

Bei dem System 1 wird vorzugsweise eine webbasierte Anwendung und einer mobile Applikation eingesetzt. Die Protokolle wie z.B. Liefer-, Abnahme- und Montageprotokolle können auf einem Mobilrechner 6 (z. B. Tablet oder Smartphone) durchgeführt werden. Das Steuerprogramm 15 löst die weiterhin üblichen handschriftlich ausgefüllten Protokolle und sonstige Insellösungen ab. Hierbei liegt der Fokus auf der Möbelbranche und insbesondere der Küchenbranche. Das Steuerprogramm 15 ist auch das Werkzeug zur Protokollierung und Dokumentierung gegenüber dem Endkunden.

Auf dem Zentralrechner 4 läuft die Software bzw. das Werkzeug zur Daten- bzw. Auftragsvorbereitung. Genutzt wird die Software im Backoffice, z. B. im Büro von den Mitarbeitern des Innendienstes oder durch den Verkäufer auf dem Geschäftsstellenrechner 5. Die erforderlichen Eingaben für Kundendaten, Lieferung, Montage können definiert sein und angefragt werden.

Meist beginnt es damit, dass die auszuführende Maßnahme 12, 13 des Auftrags 11 einen eindeutigen Maßnahmentyp 17 bekommt, wie z. B. Lieferung, Montage, Lieferung und Montage, Begutachtung, Inspektion, Unterstützung und andere mehr.

Zu den allgemeinen Auftragsinformationen gehören regelmäßig Angaben wie der Name, die Kundenklasse, Kontaktdaten, der Auftragswert mit den Inkassodaten sowie manuelle Informationen.

Der Auftrag 11 hat in der Datenbank 9 einen jeweils unterschiedliche Status, der entsprechend nach den getätigten Eingaben sich verändern kann. Ist der Auftrag terminiert und ist der Auftrag einem Ausführenden zugeordnet, kann der Datensatz 10 an den Mobilrechner 6 übertragen werden. Der Zeitpunkt der Übertragung bzw. Synchronisation kann z. B. in den Stammdaten des jeweiligen Händlers als Tageseingabe individuell definierbar sein. Möglich ist z. B., dass täglich für die kommende Woche synchronisiert wird.

Für den Maßnahmentyp "Lieferung" können Angaben zum Stockwerk, ob ein Fahrstuhl vorhanden ist, wie die Parksituation ist, Länge des Transportweges und welche Tätigkeit ausgeführt werden soll umfasst sein.

Soll z. B. eine Küchenmontage erfolgen, können Angaben ergänzt werden, wie von welchem Hersteller die Küche produziert wurde, wie viele Schränke oder Laufmeter es sind, sind. Auch Angaben über Anschlusstätigkeiten (Strom, Wasser, Abluft etc.) oder Silikonarbeiten oder wie komplex die Montage ist, können enthalten sein. Darüber hinaus können auch Infos zu einer Arbeitsplatte oder welche Geräte angeschlossen werden sollen, enthalten sein.

Die Eingaben in den Geschäftsstellenrechner 5 dienen zum einen der Eigenkontrolle und auch dazu, dass man alle Rahmenbedingungen berücksichtigt und eine richtige Aufwands- und Auftragseinschätzung abgibt. Neben dieser Auftragsvorbereitung, oder auch Auftragsklassifizierung, können dem Auftrag 11 auch Dateien hinzugefügt werden. Diese werden insbesondere anhand fester Kategorien abgespeichert. Auch andere Dateien wie der Aufmassbericht, Kaufverträge, Montageanleitungen etc. können in unterschiedlichen Dateiformaten enthalten sein. Die Serviceperson 46, 47 hat transparent alle notwendigen Dateien vor Ort auf dem Mobilrechner 6. Wenn eine Warenwirtschaft z. B. auf einem Verwaltungsrechner 7 läuft, werden die Dateien über eine Schnittstelle mit der richtigen Kategorie hochgeladen. Datenfelder füllen sich dann entsprechend automatisch und können ergänzt werden.

Auf dem Mobilrechner 6 fordert das Steuerprogramm 15 im Rahmen der Ausführung die Abarbeitung von Checklisten 35, 36 an. Dabei können unterschiedlich komplexe Checklisten 35, 36 eingesetzt werden. Diese Checklisten beinhalten definierte Prüf-, Eingabe- und/oder Fragepunkte. Manche Inhalte sollen den Ausführenden nur erinnern, an bestimmte Handlungen, Dinge zu denken. Bei anderen, ist eine Eingabe und Beantwortung auftragsrelevant oder kann sogar unumgänglich sein. Diese Prüfpunkte können Fragen "ja/nein/OK/Nicht-OK" sein. Es können auch Eingabefelder für Zahlen oder Texte vorgesehen sein. Möglich sind auch Aufforderungen, ein Bild oder Video als Nachweis zu erstellen. Oder die Auswahl per Schiebebalken "Von ... bis".

Die Checklisten sind insbesondere vorkonfiguriert und können an den Maßnahmentyp einer Maßnahme gekoppelt sein. Jeder Maßnahmentyp 17 hat andere Anforderungen und kann eine entsprechend dem Maßnahmentyp 17 vordefinierte Checkliste automatisch zugeordnet bekommen. Zusätzlich kann man bestimmte Kundenklassen und/oder Auftragsarten und/oder Auftragstypen definieren, dass z.B. eine umfangreichere Checkliste dem Auftrag (automatisch) zugeordnet wird. Bei wichtigen Aufträgen kann eine bessere Kontrolle und Dokumentation nötig sein. Es ist zudem möglich, diese "Standard-Checklisten" zu verändern und nach den eigenen Bedürfnissen (unbegrenzt) eigene Checklisten zu erstellen oder bei Ausführung auftragsbezogen zu modifizieren. Möglich ist es auch, dass man z.B. für einen noch unerfahrenen Mitarbeiter oder einen neuen Montagepartner eine umfangreichere Checkliste entwickelt, um die Qualität überprüfen zu können.

Das System 1 ist flexibel und ermöglicht es, auf den Kunden und das Können des Ausführenden gleichermaßen einzugehen.

Die Benutzung des Systems 1 und insbesondere des Steuerprogramms 15 erfolgt insbesondere nach erfolgter Registrierung durch Eingabe eines Kennwortes oder über NFC-Chips oder z. B. ein Zwei-Faktor-Verfahren. Auf einem Dashboard der Anwendung können sogenannte Kacheln angezeigt werden, wie z.B. ein Kalender mit anstehenden Terminen und der Anzeige von Urlaubstagen und Abwesenheitszeiten. Auch der Zugriff auf Benachrichtigungen und Aufgaben ist möglich. Des Weiteren ist vorzugsweise eine Auftragskachel vorgesehen, die zu einer Übersicht der zu erledigenden und der in den letzten Tagen erledigten Maßnahmen und Aufträge führt. Die erledigten Maßnahmen können z. B. nach gesicherter Synchronisation mit dem Zentralrechner 4 und nach einer definierten Zeitspanne automatisch gelöscht werden.

Die Aufträge werden gesetzeskonform mit den relevanten Informationen, die man für einen Schnellüberblick benötigt, angezeigt. Hierzu kann auf visuelle Unterstützung durch Icons zurückgegriffen werden, die z. B. bzgl. der Kundenklasse und der Montagekomplexität etc. farblich variieren können.

Ausgegraut oder anderweitig optisch markiert und nicht mehr veränderbar können bereits versiegelte Maßnahmen und Aufträge sein. Diese können noch betrachtet werden.

Icons oder Schaltflächen können für das Erstellen eines Bildes oder die Erfassung von Notizen oder die Erstellung einer Nachbestellung vorgesehen sein. Ruft der Nutzer eine Maßnahme oder einen Auftrag auf, können weitere Informationen angezeigt werden, wie z. B. der Name des Endkunden, die Telefonnummer und die Adresse. Durch Anklicken der Telefonnummer kann der Kunden gegebenenfalls direkt angerufen werden. Durch Anklicken der Adresse kann die integrierte Navigation starten. Das Steuerprogramm 15 kann auch zur Erfassung der Arbeitszeit dienen.

Im Laufe der Bearbeitung gelangt die Serviceperson auch zu wenigstens einer Checkliste. Die Checkliste kann in Kapitel unterteilt sein. Jedes Kapitel kann eine eigene Überschrift aufweisen, die das jeweilige Thema prägnant angibt. Z. B. kann eine "Checkliste Chapter 1" und es können "Checkliste Chapter 2+n" Kapitel darstellen, die individuell erstellt und vorgegeben werden können und die je nach Maßnahmentyp und Auftragsinhalt variieren können. Parallel zur Bearbeitung wird die Protokolldateigruppe 40 modifiziert. Darin gelangen auch automatisch definierte Inhalte. Bei der Abarbeitung einer Checkliste hat der Nutzer die Fragen, Prüfpunkte, Hilfestellungen, Eingabeaufforderungen insbesondere durch Aktivierung von Icons oder Eingaben zu bearbeiten. Mit jeder erledigten Frage kann sich der Fortschrittsbalken des Kapitels und/oder der gesamten Checkliste oder Bearbeitung füllen.

Soll ein Mangel bei der Abarbeitung der Checkliste erfasst werden, so kann dies entweder durch die negative Beantwortung des Prüfpunktes oder durch manuelles Öffnen eines sogenannten Tickets erfolgen. Eine Ticket kann eine weitere (Folge-) Maßnahme 13 erzeugen.

Wird ein Ticket oder eine Beanstandung erfasst, kann nach der Synchronisierung eine automatische Weiterverarbeitung und Nachbestellung von Teilen erfolgen. Bei Erstellung einer Folgemaßnahme 13 ist die Serviceperson insbesondere verpflichtet den Maßnahmentyp anzugeben und hat zu unterscheiden, ob es ein Fehler, ein Auftrag oder eine Notiz ist. Eine Notiz kann z. B. sein, dass es sachlich richtig geliefert ist, der Endkunde aber der Meinung ist, dass es anders vereinbart war. Das muss dann später geklärt werden.

Des Weiteren kann die Serviceperson eine Artikelnummer angeben und z. B. mittels einer Drop-Down-Liste das Problem auswählen und z. B. eine erklärende Notiz erfassen.

Zusätzlich kann die Möglichkeit bestehen, ein Bild, ein Video, eine Skizze oder einen Screenshot mit aufzunehmen. Es können Markierungen vorgenommen werden oder Text ergänzt werden.

Sind im Auftrag 11 Positionen enthalten, kann aus der Positionsliste eine Nachbestellung veranlasst werden. Dann ist die Artikelnummer vorausgefüllt.

Wenn Ersatzteile und/oder Baugruppen verfügbar sind, können diese in einer Liste und/oder visuell am Bildschirm ausgewählt werden.

Gegebenenfalls gibt es auch die Möglichkeit ein Inkasso zu tätigen. Hier kann es die Möglichkeit der Erteilung des Lastschriftmandates geben. Auch die Dokumentation hinsichtlich des Geldwäschegesetzes ist in digitalisierter Form möglich.

Für eine Unterschrift des Kunden können diverse Möglichkeiten zur Verfügung stehen. So kann der Kunde unterzeichnen oder mittels eines Tondokuments kontaktlos die Abnahme vornehmen. Es kann ein Vertreter unterzeichnen oder ein Tondokument abgeben. Ist niemand zur Abnahme anwesend, so kann das ebenfalls ausgewählt werden.

Insbesondere signiert auch die Serviceperson. Danach sind die Maßnahme und die Protokolldateigruppe 40 versiegelt. Der Zugriff und die Einsicht auf den Auftrag ist weiterhin möglich, jedoch kann ohne Weiteres nichts mehr geändert oder ergänzt werden.

Über Schnittstellen können nach Synchronisation Informationen in das Warenwirtschaftssystem zur Weiterverarbeitung automatisch übertragen werden. Bei erfolgtem Inkasso kann z.B. automatisch eine Buchung ausgelöst werden.

Möglich ist eine sogenannte Händler-Hersteller-Kopplung, bei der die Bestellung durch Online-Datenübertragung vom Ersterfasser, z.B. dem Monteur direkt zur Industrie erfolgen kann. Hierfür wählt der Monteur einzelne Bauteile/Ersatzteile eines Artikels, Schrankes etc. aus, um an dem Bauteil/Ersatzteil die gewünschte Information (Text, Skizze, Bild, Video, Problem, Ursache etc.) zu erfassen bzw. zu hinterlegen. Der Händler kann diese Daten weiterhin in eigene z.B. Warenwirtschaftssysteme einfließen lassen. Es ist aber nicht mehr zwingend notwendig, diese im Backoffice zwischenzubearbeiten und abzutippen wie bisher. Alle notwendigen Angaben zur direkten Weiterverarbeitung sind enthalten, so dass die (Nach-) Bestellung praktisch aus dem Steuerprogramm 15 (bzw. aus dem Zentralrechner 4) veranlasst wird. Die Datenbank 9 im Zentralrechner 4 enthält dazu neben den Auftragsdaten des Händlers auch die der Industrie. Deshalb kennt der Zentralrechner 4 nicht nur die Positionsnummern und Bestellnummern des Händlers, sondern auch die entsprechenden Bezeichnungen und Informationen der Industrie. Außerdem erhält das Serviceteam 45 vor der Montage einen aktualisierten Datensatz mit aktualisierten Herstellerinformationen.

Es ist möglich, dass auftragsbezogene Produktinformationen tagesaktuell verfügbar sind, so dass z.B. Wiederbeschaffungszeiten von Produkten zur Terminierung des Folgetermins mit dem Endkunden berücksichtigt werden. Auch Anpassungen bei Montageanleitungen und Produktinformationen können tagesaktuell direkt den Anwender (Monteur) erreichen. Dies kann nicht mehr nur auf dem Papierwege erfolgen, sondern auch elektronisch.

Vorzugsweise werden die Daten insbesondere so verknüpft, dass automatisierte und unabhängige Prozesse definiert werden. Endverbraucher, Handel, Hersteller kommunizieren dabei systemunterstützt autark. Ein Aktuell noch nicht realisierter Umsatz kann so später noch realisiert werden: Angebote an den Endverbraucher, die zum getätigten Kauf passen (After-Sales-Service z.B.: Auswahl an Besteckeinsätze passend zum Schubladenmaß) oder die damit im Zusammenhang stehen (Cross Selling z.B. Geschirr, Töpfe, Stühle), können automatisch angeboten werden.

Darüber hinaus ist die produktbezogene Analyse und eine daraus abgeleitete auftragsbezogene Ansprache möglich. Z.B., wenn es ein neuartiges Produkt zur vereinfachten Einteilung eines Auszuges gibt, können die Aufträge der Vergangenheit sichtbar gemacht werden, wo diese Auszüge verbaut sind. Das kann seitens der Industrie durch Systemabfragen erfolgen. Über den Handel kann dann über ein Shop- oder Mailingsystem gezielt der Verbraucher angesprochen werden, für den dieser Artikel in Frage kommt. Über das Shopsystem kann die Abwicklung effizient und so automatisiert wie möglich erfolgen.

Dies löst das Problem, dass die Verkaufenden von heute wenig Interesse an dieser Art von wenig umsatzintensiven "Kleinaufträgen" haben, da die Verkaufenden i.d.R. Provisionen erhalten. Es ermöglicht mehr Umsatz für Industrie und Handel als auch Kundenbindung und -zufriedenheit.

Besonderheiten sind, dass Baugruppen und Ersatzteile auftragsbezogen ergänzt werden. Bei Ersatzteilen handelt es sich um diejenigen, die auch in den Verkaufshandbüchern angegeben sind und an sich bereits als Bestellartikel vorliegen. Zusätzliche Informationen wie Dateien der Industrie (Skizzen, Montageanleitungen etc.) oder Links (Videos o.ä.) zu Produkten können integriert werden. Informationen zu Produktanpassungen erreichen den ausführenden Monteur direkt. Eine fehlende Weitergabe von Informationen in der klassischen Informationskette kann vermieden werden.

Die Serviceperson bzw. der Monteur kann vor Ort ein Ersatzteil 51 durch Auswahl des Artikels aus einer (Positions-) Auflistung auswählen. Sofern es sich um einen Artikel mit dahinterliegenden Baugruppen und Ersatzteilen handelt und es eine 2D-Skizze gibt, kann diese zur Vereinfachung des Erfassungsablaufes genutzt werden. Der Monteur kann durch wenige Klicks das gewünschte Bauteil finden. Zu den Bauteilen werden neben den üblichen Beschreibungen vorzugsweise auch ein Bild und/oder Link angezeigt, sofern vorhanden.

Es kann ein Verknüpfung von Problem, Ersatzteil und Bild in einem Datensatz erfolgen. Die Bestelldatei kann auf Basis des gängigen Standardformates (z.B. IDM-Formates) erfolgen.

Ein Abtippen der Informationen beim Handel und ein Abtippen der Informationen in der Industrie sind nicht mehr nötig. Ein automatisierbarer Bestätigungsdurchlauf von Nachbestellungen ist möglich.

Es kann eingestellt werden, wann ein Auftrag an den Mobilrechner 6 übermittelt wird. Es kann auch eingestellt werden, wann ein ausgeführter Auftrag gelöscht wird. Dies inkl. der erstellten Medien, die auf dem Mobilgerät 6 abgelegt sind.

Es ist möglich, dass Seriennummern der Elektrogeräte auf Basis der über Schnittstellen eingegangenen Geräteinformationen vor Ort mittels "Bildanalyse" (Geräteschild abfotografieren reicht) erfasst werden. Seriennummern sind geräteindividuell und vorteilhaft, um Ersatzteile bestellen zu können oder zur Beauftragung eines Servicetechnikers des Geräteherstellers im Falle eines Defektes.

Wiederbeschaffungszeiten der Industrie könnten direkt mitgegeben werden (z.B. für eine Kunststofffront 3 Tage Herstellung + 5 Tage Transport = 8 Tage. Echtholzfront 20 Tage Herstellung + 5 Tage Transport = 25 Tage).

Kombiniert mit der Durchlaufzeit des Händlers (z.B. 5 Tage) und Zugriff auf den Kalender, kann direkt ein Nachmontagetermin vereinbart werden (Bsp.: Echtholzfront: 25 Tage Industrie + 5 Tage Handel = 30 Tage. Frühtester Nachmontagetermin ab Tag 31).

Eine visuelle Auswahl des Schrankes kann aus der Skizze heraus erfolgen. Oder aus der Kameraaufnahme oder auf Basis einer VR-Brille. Es kann auch KI eingebunden werden.

Es ist möglich, Business Intelligence einzubinden, um z. B. bis auf Teileebene (personenbezogen) zu analysieren und Maßnahmen ableiten zu können. Eine Gamification zur Förderung der Leistung, Qualität und des Spaßes ist für den Anwender mit allen nachgewiesenen Vorteilen möglich.

### Bezugszeichenliste:

| | | | |
|---|---|---|---|
| 1 | System | 24 | Backofen |
| 2 | Möbelstruktur | 25 | Beschaffungszeiten, Wiederbeschaffungszeit |
| 3 | Recheneinheit | | |
| 4 | Zentralrechner | 26 | Auftragsinformationen |
| 4d | Internetangebot | 27 | Aufbauplan |
| 5 | Geschäftsstellenrechner | 28 | Detailansicht |
| 6 | Mobilrechner | 30 | Daten |
| 6a | Kamera | 31 | Bild |
| 6b | Mikrofon | 32 | Audiodatei |
| 6c | Eingabebereich | 33 | Unterschrift |
| 6d | Mobilrechner | 35 | Checkliste |
| 7 | Verwaltungsrechner | 36 | Checkliste |
| 8 | Datenverbindung | 40 | Protokolldateigruppe |
| 9 | Datenbank | 45 | Serviceteam |
| 9a | Datenbank | 46 | Serviceperson |
| 10 | Datensatz | 47 | Serviceperson |
| 10a | Datensatz | 50 | Bestellung |
| 11 | Auftrag | 51 | Ersatzteil |
| 12 | Maßnahme | 52 | Zusatzteil |
| 12a | Lieferdatum | 53 | Bestelldaten |
| 12b | Lieferkondition | 54 | Anzahl |
| 13 | Maßnahme | 55 | Typangabe, Angabe |
| 14 | Zuschlagzeit | 56 | Bestellnummer |
| 15 | Steuerprogramm | 60 | Servicerechner, Herstellerrechner |
| 16 | Ausführungszeitpunkt | | |
| 16a | Kalenderdaten | 60a | Hersteller |
| 16b | Verfügbarkeitsdaten | 61 | Servicerechner, Herstellerrechner |
| 17 | Maßnahmentyp | | |
| 18 | Warnsignal | 61a | Hersteller |
| 19 | Rückmeldung | 62 | Servicerechner, Herstellerrechner |
| 20 | Komponente | | |
| 21 | Unterschrank | 62a | Hersteller |
| 21a | Hochschrank | | |
| 22 | Oberschrank | | |
| 23 | Tür | | |
| 23a | Schubkasten | | |

## Patentansprüche

1. System (1) zur Organisation und Unterstützung für Unternehmen der Möbelbranche bei der Bearbeitung von Aufträgen und zugehörigen Maßnahmen betreffend Aufbau, Lieferung und Service von Möbelstrukturen (2),
wobei das System (1) wenigstens drei Recheneinheiten (3) umfasst, nämlich einen Zentralrechner (4) und wenigstens einen Geschäftsstellenrechner (5) und wenigstens einen Mobilrechner (6), wobei die Recheneinheiten (3) wenigstens zeitweise über wenigstens eine Datenverbindung (8) wenigstens zum Teil miteinander in Verbindung stehen,
wobei der Zentralrechner (4) eine Datenbank (9) mit Datensätzen (10) über Aufträge (11) von Möbelstrukturen (2) und zugehörige Maßnahmen (12, 13) enthält, und
wobei der Geschäftsstellenrechner (5) dazu ausgebildet und eingerichtet ist, Auftragsdatensätze (11) zu erstellen, welche als Datensätze (10) in der Datenbank (9) des Zentralrechners (4) abgelegt werden,
wobei ein Datensatz (10) Angaben über den Aufbau, die Konfiguration und die Zusammensetzung der Komponenten (20) der Möbelstruktur (2) umfasst, und
wobei der Mobilrechner (6) dazu ausgebildet und eingerichtet ist, ein Steuerprogramm (15) auszuführen, welches Anweisungsschritte über durchzuführende Schritte bei der Erledigung einer Maßnahme (12, 13) des Auftrags (11) ausgibt und die zu erfassenden Daten (30) automatisch anfordert und daraus eine Protokolldateigruppe (40) erstellt,
wobei der Mobilrechner (6) und der Zentralrechner (4) dazu ausgebildet und eingerichtet sind, eine konfigurierbare Datensynchronisation automatisch durchzuführen,
wobei der Zentralrechner (4) dazu ausgebildet und eingerichtet ist, die Protokolldateigruppe (40) automatisch auszuwerten und Bestelldaten (53) für eine daraus abgeleitete Bestellung (50) über ein Ersatz- (51) oder Zusatzteil (52) zu generieren, sodass eine manuelle Erfassung von Bestelldaten (53) an dem Geschäftsstellenrechner (5) nicht nötig ist,
und dass der Zentralrechner (4) dazu ausgebildet und
eingerichtet ist, in einem konfigurierbaren Zeitabstand vor der Durchführung einer Maßnahme (12, 13) wenigstens einen Servicerechner (60) eines Herstellers zu kontaktieren und aktualisierte Auftragsinformationen (26) abzurufen und in dem Datensatz (10) abzulegen.

2. System (1) nach Anspruch 1,
wobei ein Servicerechner (60) dazu ausgebildet und eingerichtet ist, wenigstens einmal nach der Bestellung und bei Änderungen an der Möbelstruktur den Zentralrechner (4) zu kontaktieren und aktuelle Auftragsinformationen (26) dem Zentralrechner (4) zu übergeben und in dem Datensatz (10) abzulegen.

3. System (1) nach Anspruch 1 oder 2, wobei der Zentralrechner (4) dazu ausgebildet und eingerichtet ist, die Bestellung (50) automatisch abzusenden, wenn vordefinierte Kriterien erfüllt sind und wobei der Zentralrechner (4) dazu ausgebildet und eingerichtet ist, eine Bestätigung anzufordern und die Bestellung (50) nach erfolgter Bestätigung abzusenden.

4. System (1) nach einem der vorhergehenden Ansprüche, wobei der Zentralrechner (4) dazu ausgebildet und eingerichtet ist, eine Mehrzahl unterschiedlicher Servicerechner (60-62) zu kontaktieren und Auftragsinformationen (26) abzurufen und wobei der Zentralrechner (4) dazu ausgebildet und eingerichtet ist, je nach Ersatz- oder Zusatzteil (51, 52) den entsprechend zugehörigen Servicerechner (60-62) automatisch mit entsprechenden Bestelldaten (53) zu kontaktieren.

5. System (1) nach einem der vorhergehenden Ansprüche, wobei aus der Protokolldateigruppe (40) Angaben (55) über den Hersteller (60a) der Ersatz- oder Zusatzteile (51, 52) herausgefiltert werden und der Servicerechner (60-62) anhand der herausgefilterten Angaben (55) ausgewählt wird.

6. System (1) nach einem der vorhergehenden Ansprüche, wobei der Zentralrechner (4) dazu ausgebildet und eingerichtet ist, automatisch eine Rückmeldung (19) des Servicerechners (60-62) zu verarbeiten und aus der Rückmeldung (19) Liefer- und Wiederbeschaffungszeiten und Lieferkonditionen (12b) in den zugehörigen Datensatz (10) zu übernehmen
und wobei der Zentralrechner (4) dazu ausgebildet und eingerichtet ist, aus der Rückmeldung (19) des Servicerechners (60-62) unter Berücksichtigung vorbestimmter Zuschlagzeiten (14) und/oder interner Kalenderdaten (16a) und/oder Verfügbarkeitsdaten (16b) wenigstens einen möglichen Ausführungszeitpunkt (16) für die Maßnahme (12) vorzuschlagen und/oder abzusenden.

7. System (1) nach einem der vorhergehenden Ansprüche, wobei der Datensatz (10) zu einem Auftrag (11) Angaben über die durchzuführenden Maßnahmen (12, 13) umfasst und eine Mehrzahl unterschiedlicher Maßnahmentypen (17) umfasst.

8. System (1) nach einem der vorhergehenden Ansprüche, wobei der Zentralrechner (4) dazu ausgebildet und eingerichtet ist, in einem einstellbaren Zeitraum vor der geplanten Maßnahme (12, 13) den Servicerechner (60-62) automatisch zu kontaktieren und aktualisierte Auftragsinformationen (26) in den Datensatz (10) des zugehörigen Auftrags (11) zu übernehmen und wobei der Zentralrechner (4) dazu ausgebildet und eingerichtet ist, ein Warnsignal (18) auszugeben, wenn der Servicerechner keine Rückmeldung (19) liefert oder eine Verzögerung der Lieferung bekannt gibt,
und wobei der Zentralrechner (4) dazu ausgebildet und eingerichtet ist, bei allen Maßnahmen (12,13) Wiederbeschaffungszeiten (25) für alle Komponenten (20) der Möbelstruktur (2) bei dem wenigstens einen Hersteller (60-62) abzufragen.

9. System (1) nach einem der vorhergehenden Ansprüche, wobei der Zentralrechner (4) dazu ausgebildet und eingerichtet ist, anhand der Protokolldateigruppe (40) automatisch eine Maßnahme (12, 13) zu erstellen und einzurichten und wobei der Zentralrechner (4) dazu ausgebildet und eingerichtet ist, bei Einrichtung einer Maßnahme (12, 13) aus der Protokolldateigruppe (40) den benötigten Hersteller (60a) zu ermitteln und den Servicerechner (60) zu kontaktieren und aktualisierte Auftragsinformationen (26) abzurufen und wobei die Auftragsinformationen (26) wenigstens eine Information aus einer Gruppe von Informationen umfassen, welche Gruppe von Informationen einen Aufbauplan (27), Detailansichten (28), Stücklisten (29), Typangaben (55), Bestellnummern (56) und Beschaffungszeiten (25) und Logistikinformationen umfassen.

10. System (1) nach einem der vorhergehenden Ansprüche, wobei der Mobilrechner (6) einem Serviceteam (45) mit wenigstens einer Serviceperson (46, 47) zugeordnet ist und regelmäßig mit dem Zentralrechner (4) synchronisiert wird, um dem Serviceteam (45) die zu bearbeitenden Maßnahmen (12,13) der Aufträge (11) zur Verfügung zu stellen und um aus einem Datensatz (10) abgeleitete Auftragsinformationen (26) auf dem Mobilrechner (6) zur Verfügung zu stellen und darauf erstellte Protokolldateigruppen (40) herunterzuladen und wobei der Mobilrechner (6) dazu ausgebildet und eingerichtet ist, bei einer Maßnahme (12, 13) eine Anfertigung akustischer und/oder optischer Daten (30) anzufragen, um diese in der Protokolldateigruppe (40) der Maßnahme zu speichern und wobei der Mobilrechner (6) dazu ausgebildet und eingerichtet ist, eine Checkliste (35, 36) auszugeben und Eingaben einzufordern, wobei der Mobilrechner (6) dazu ausgebildet und eingerichtet ist, unterschiedlich komplexe Checklisten (35, 36) auszugeben und wobei eine Komplexität einer ausgewählten Checkliste von dem Serviceteam und/oder einem Wert der Maßnahme und/oder einer Kategorie des Kunden und/oder Auftrages (11) abhängt.

11. System (1) nach einem der vorhergehenden Ansprüche, wobei der Geschäftsstellenrechner (5) mit einem Verwaltungsrechner (7) in Datenverbindung (8) steht, der dazu ausgebildet und eingerichtet ist, eine Datenbank (9a) mit einer Auftragsverwaltung mit Datensätzen (10a) mit Aufträgen (11) zur Verfügung zu stellen, die mit dem Geschäftsstellenrechner (5) bearbeitbar sind
und wobei der Verwaltungsrechner (7) dazu ausgebildet und eingerichtet ist, einen Datensatz (10a) der Datenbank (9a) auszuwerten und einen Servicerechner (60-62) zu kontaktieren und dem Servicerechner (60-62) eine Bestellung zu übermitteln und einen Liefertermin anzufragen.

12. System (1) nach einem der vorhergehenden Ansprüche, wobei der Zentralrechner (4) und der Verwaltungsrechner (7) dazu ausgebildet und eingerichtet sind, automatisch Datensätze (10, 10a) wenigstens zum Teil zu synchronisieren.

13. System (1) nach einem der vorhergehenden Ansprüche, wobei der Mobilrechner (6) dazu ausgebildet und eingerichtet ist, eine Oberflächenstruktur an einem Lieferumfang der Möbelstruktur zu erkennen und zugeordnete zusätzliche Daten über die Möbelstruktur und deren Bestandteile aktuell von einem Servicerechner (60) abzurufen.

14. Verfahren zum Betreiben eines Systems (1) zur Organisation und Unterstützung für Unternehmen des Möbelhandels bei der Bearbeitung von Aufträgen (11) und zugehörigen Maßnahmen (12, 13) betreffend Aufbau, Lieferung und/oder Service von Möbelstrukturen (2) unter Verwendung wenigstens eines Rechengeräts (3) oder eines Mobilrechners (6) eines Systems (1) gemäß einem der vorhergehenden Ansprüche, wobei auf dem Mobilrechner (6) ein Steuerprogramm (15) ausgeführt wird, und welches vor einer Maßnahme (12, 13) eines Auftrags (11) aktualisierte Auftragsinformationen (26) bereitgestellt bekommt
und/oder wobei einer Serviceperson (46, 47) Anweisungsschritte über durchzuführende Schritte bei der Erledigung einer Maßnahme des Auftrags (11) ausgegeben werden und die von der Serviceperson (46, 47) zu erfassenden Daten automatisch angefordert werden und eine Protokolldateigruppe (40) erstellt wird, und wobei der Mobilrechner (6) mit dem Zentralrechner (4) eine konfigurierbare Datensynchronisation automatisch durchführt,
und wobei der Zentralrechner (4) in einem konfigurierbaren Zeitabstand vor der Durchführung einer Maßnahme (12, 13) den wenigstens einen Servicerechner (60) eines Herstellers kontaktiert und aktualisierte Auftragsinformationen (26) abruft und in dem Datensatz (10) ablegt.

## Claims

1. System (1) for the organization and support of companies in the furniture industry in the processing of orders and related actions concerning the construction, supply and service of furniture structures (2),
wherein the system (1) comprises at least three computing units (3), namely a central computer (4) and at least one branch office computer (5) and at least one mobile computer (6), wherein the computing units (3) are at least temporarily connected to each other, at least in part, via at least one data link (8),
wherein the central computer (4) contains a database (9) with data records (10) concerning orders (11) for furniture structures (2) and associated actions (12, 13), and
wherein the branch office computer (5) is designed and configured to create order data records (11), which are stored as data records (10) in the database (9) of the central computer (4),
wherein a data record (10) comprises information on the construction, configuration and composition of the components (20) of the furniture structure (2), and
wherein the mobile computer (6) is designed and configured to execute a control program (15), which outputs instruction steps about steps to be carried out when performing an action (12, 13) of the order (11) and automatically requests the data (30) to be recorded and creates a log file group (40) from it,
wherein the mobile computer (6) and the central computer (4) are designed and configured to carry out configurable data synchronization automatically,
wherein the central computer (4) is designed and configured to automatically evaluate the log file group (40) and to generate order data (53) for a purchase order (50) derived therefrom relating to a replacement part (51) or additional part (52), so that a manual recording of order data (53) on the branch office computer (5) is not necessary,
and that the central computer (4) is designed and configured to contact at least one service computer (60) of a manufacturer in a configurable time interval before carrying out an action (12, 13) and to retrieve updated order information (26) and store it in the data record (10).

2. System (1) according to Claim 1,
wherein a service computer (60) is designed and configured to contact the central computer (4) at least once after the order placement and in the event of changes to the furniture structure, and to transfer up-to-date order information (26) to the central computer (4) and store it in the data record (10).

3. System (1) according to Claim 1 or 2,
wherein the central computer (4) is designed and configured to submit the purchase order (50) automatically if predefined criteria are met, and wherein the central computer (4) is designed and configured to request a confirmation and to submit the purchase order (50) after confirmation.

4. System (1) according to any one of the preceding claims, wherein the central computer (4) is designed and configured to contact a plurality of different service computers (60-62) and to retrieve order information (26) and wherein the central computer (4) is designed and configured, depending on the replacement part or additional part (51, 52), to contact the associated service computer (60-62) automatically with corresponding ordering data (53).

5. System (1) according to any one of the preceding claims, wherein information (55) about the manufacturer (60a) of the replacement or additional parts (51, 52) is filtered out of the log file group (40) and the service computer (60-62) is selected based on the filtered out information (55).

6. System (1) according to any one of the preceding claims, wherein the central computer (4) is designed and configured to automatically process feedback (19) from the service computer (60-62) and to incorporate delivery and replacement times and delivery conditions (12b) from the feedback (19) into the associated data record (10)
and wherein the central computer (4) is designed and configured to propose and/or submit at least one possible execution time (16) for the action (12) from the feedback (19) of the service computer (60-62), taking into account predefined lead times (14) and/or internal calendar data (16a) and/or availability data (16b).

7. System (1) according to any one of the preceding claims, wherein the data record (10) for an order (11) comprises information on the actions (12, 13) to be carried out and a plurality of different action types (17).

8. System (1) according to any one of the preceding claims, wherein the central computer (4) is designed and configured to contact the service computer (60-62) automatically in a configurable time period prior to the planned action (12, 13) and to include updated order information (26) in the data record (10) of the associated order (11)
and wherein the central computer (4) is designed and configured to output a warning signal (18) if the service computer does not provide any feedback (19) or announces a delay in delivery,
and wherein the central computer (4) is designed and configured to request replacement times (25) for all components (20) of the furniture structure (2) from the at least one manufacturer (60-62) for all actions (12, 13).

9. System (1) according to any one of the preceding claims, wherein the central computer (4) is designed and configured to create and configure an action (12, 13) automatically on the basis of the log file group (40) and wherein the central computer (4) is designed and configured to determine the required manufacturer (60a) when configuring an action (12, 13) from the log file group (40) and to contact the service computer (60) and retrieve updated order information (26)
and wherein the order information (26) comprises at least one information item from a group of information items, said group of information items comprising a layout plan (27), detailed views (28), parts lists (29), type specifications (55), order numbers (56) and procurement times (25) and logistics information.

10. System (1) according to any one of the preceding claims, wherein the mobile computer (6) is assigned to a service team (45) with at least one service person (46, 47) and is regularly synchronized with the central computer (4) in order to provide the service team (45) with the actions (12, 13) to be processed for the orders (11) and in order to make order information (26) derived from a data record (10) available on the mobile computer (6) and to download log file groups (40) created thereon and wherein the mobile computer (6) is designed and configured, in the event of an action (12, 13), to request preparation of acoustic and/or optical data (30) in order to store it in the log file group (40) of the action, and wherein the mobile computer (6) is designed and configured to output a checklist (35, 36) and to request inputs, wherein the mobile computer (6) is designed and configured to output checklists (35, 36) of different complexity and wherein the complexity of a selected checklist depends on the service team and/or a value of the action and/or a category of the customer and/or of the order (11).

11. System (1) according to any one of the preceding claims, wherein the branch office computer (5) has a data link (8) to a management computer (7) which is designed and configured to provide a database (9a) with an order management system with data records (10a) comprising orders (11) which can be processed with the branch office computer (5)
and wherein the management computer (7) is designed and configured to evaluate a data record (10a) of the database (9a) and to contact a service computer (60-62) and to transfer a purchase order to the service computer (60-62) and request a delivery date.

12. System (1) according to any one of the preceding claims, wherein the central computer (4) and the management computer (7) are designed and configured to automatically synchronize data records (10, 10a), at least partially.

13. System (1) according to any one of the preceding claims, wherein the mobile computer (6) is designed and configured to detect a surface structure on the delivery contents of the furniture structure and to retrieve updated additional data about the furniture structure and its components from a service computer (60).

14. Method for operating a system (1) for organizing and supporting companies in the furniture trade in the processing of orders (11) and related actions (12, 13) concerning construction, delivery and/or service of furniture structures (2) using at least one computing device (3) or mobile computer (6) of a system (1) according to any one of the preceding claims, wherein a control program (15) is executed on the mobile computer (6), and which is provided with updated order information (26) before an action (12, 13) of an order (11)
and/or wherein instruction steps relating to steps to be carried out when completing an action of the order (11) are issued to a service person (46, 47) and the data to be recorded by the service person (46, 47) are automatically requested and a log file group (40) is created, and wherein the mobile computer (6) automatically performs a configurable data synchronization with the central computer (4),
and wherein the central computer (4) contacts the at least one service computer (60) of a manufacturer in a configurable time interval before carrying out an action (12, 13) and retrieves updated order information (26) and stores it in the data record (10).

## Revendications

1. Système (1) d'organisation et d'assistance aux entreprises du secteur de l'ameublement pour le traitement des commandes et les mesures connexes relatives à la construction, la livraison et l'entretien des structures d'ameublement (2), dans lequel le système (1) comprend au moins trois unités informatiques (3), à savoir un ordinateur central (4), au moins un ordinateur de succursale (5) et au moins un ordinateur mobile (6), dans lequel les unités informatiques (3) étant interconnectées, au moins partiellement et temporairement, par au moins une connexion de données (8), dans lequel l'ordinateur central (4) contient une base de données (9) avec des enregistrements de données (10) relatifs aux commandes (11) de structures d'ameublement (2) et aux mesures connexes (12, 13) et dans lequel l'ordinateur de succursale (5) est configuré pour créer des enregistrements de données de commande (11), qui sont stockés comme enregistrements de données (10) dans la base de données (9) de l'ordinateur central (4),
dans lequel un enregistrement de données (10) contient des informations sur la construction, la configuration et la composition des composants (20) de la structure d'ameublement (2) et
dans lequel l'ordinateur mobile (6) est configuré pour exécuter un programme de commande (15) qui émet des instructions concernant les étapes à suivre pour réaliser une mesure (12, 13) de la commande (11) et demande automatiquement les données à enregistrer (30) et crée un groupe de fichiers journaux (40) à partir de celles-ci, dans lequel l'ordinateur mobile (6) et l'ordinateur central (4) sont ainsi entraînés et configurés pour effectuer automatiquement une synchronisation de données configurable, dans lequel l'ordinateur central (4) est conçu et configuré pour évaluer automatiquement le groupe de fichiers journaux (40) et générer des données de commande (53) pour une commande dérivée (50) pour une pièce de remplacement (51) ou une pièce supplémentaire (52), de sorte qu'une saisie manuelle des données de commande (53) sur l'ordinateur de succursale (5) ne soit pas nécessaire et l'ordinateur central (4) est conçu et configuré pour contacter au moins un ordinateur de service (60) d'un fabricant à un intervalle de temps configurable avant l'exécution d'une mesure (12, 13) et récupérer des informations de commande mises à jour (26) et les enregistrer dans la base de données (10).

2. Système (1) selon la revendication 1, dans lequel un ordinateur de service (60) est conçu et configuré pour contacter l'ordinateur central (4) au moins une fois après la passation de la commande et lors de toute modification de la structure d'ameublement, afin de transmettre les informations de commande actuelles (26) à l'ordinateur central (4) et les enregistrer dans la base de données (10).

3. Système (1) selon la revendication 1 ou 2, dans lequel l'ordinateur central (4) est configuré pour envoyer automatiquement la commande (50) lorsque des critères prédéfinis sont remplis et dans lequel l'ordinateur central (4) est conçu et configuré pour demander une confirmation et envoyer la commande (50) après une réception réussie.

4. Système (1) selon une des revendications précédentes, dans lequel l'ordinateur central (4) est conçu et configuré pour contacter une pluralité d'ordinateurs de service différents (60-62) et récupérer les informations de commande (26) et dans lequel l'ordinateur central (4) est conçu et configuré pour contacter automatiquement l'ordinateur de service correspondant (60-62) avec les données de commande pertinentes (53) en fonction de la pièce de rechange ou supplémentaire (51, 52).

5. Système (1) selon une des revendications précédentes, dans lequel les informations (55) relatives au fabricant (60a) des pièces de rechange ou supplémentaires (51, 52) sont extraites du groupe de fichiers journaux (40) et l'ordinateur de service (60-62) est sélectionné en fonction des informations extraites (55).

6. Système (1) selon une des revendications précédentes, dans lequel l'ordinateur central (4) est configuré pour traiter automatiquement une réponse (19) de l'ordinateur de service (60-62) et pour transférer les délais et conditions de livraison et de réapprovisionnement (12b) de la réponse (19) vers l'enregistrement de données correspondant (10) et dans lequel l'ordinateur central (4) est conçu et configuré pour proposer et/ou envoyer au moins un délai d'exécution possible (16) pour la mesure (12) à partir de la réponse (19) de l'ordinateur de service (60-62), en tenant compte des majorations prédéterminées (14) et/ou des données de calendrier interne (16a) et/ou des données de disponibilité (16b).

7. Système (1) selon une des revendications précédentes, dans lequel l'enregistrement de données (10) relatif à une commande (11) comprend des informations sur les mesures (12, 13) à exécuter et comprend plusieurs types de mesures différents (17).

8. Système (1) selon une des revendications précédentes, dans lequel l'ordinateur central (4) est configuré pour contacter automatiquement l'ordinateur de service (60-62) dans un délai ajustable avant l'action planifiée (12, 13) et pour transférer les informations de commande mises à jour (26) à l'enregistrement de données (10) de la commande associée (11) et dans lequel l'ordinateur central (4) est conçu et configuré pour émettre un signal d'avertissement (18) si l'ordinateur de service ne fournit pas de retour d'information (19) ou signale un retard de livraison et dans lequel l'ordinateur central (4) est conçu et configuré pour interroger les délais de réapprovisionnement (25) de tous les composants (20) de la structure d'ameublement (2) auprès d'au moins un fabricant (60-62) pour toutes les actions (12, 13).

9. Système (1) selon une des revendications précédentes, dans lequel l'ordinateur central (4) est conçu et configuré pour créer et configurer automatiquement une mesure (12, 13) à partir du groupe de fichiers journaux (40) et dans lequel l'ordinateur central (4) est conçu et configuré pour déterminer le fabricant requis (60a) à partir du groupe de fichiers journaux (40) lors de la configuration d'une mesure (12, 13), et pour contacter l'ordinateur de service (60) afin de récupérer les informations de commande mises à jour (26) et dans lequel les informations de commande (26) comprennent au moins un élément d'information parmi un ensemble d'informations, lequel ensemble d'informations comprend un plan d'assemblage (27), des vues détaillées (28), des nomenclatures (29), des spécifications de type (55), des numéros de commande (56) et des délais d'approvisionnement (25) et des informations logistiques.

10. Système (1) selon une des revendications précédentes, dans lequel l'ordinateur mobile (6) est affecté à une équipe de service (45) comprenant au moins un technicien (46, 47) et est régulièrement synchronisé avec l'ordinateur central (4) afin de fournir à l'équipe de service (45) les mesures (12, 13) à traiter pour les commandes (11) et de fournir des informations sur les commandes (26) issues d'un enregistrement de données (10) sur l'ordinateur mobile (6) et de télécharger les groupes de fichiers journaux (40) qui y sont créés et dans lequel l'ordinateur mobile (6) est configuré pour demander une création de données acoustiques et/ou optiques (30) pendant une mesure (12, 13) afin de les stocker dans le groupe de fichiers journaux (40) de la mesure et dans lequel l'ordinateur mobile (6) est configuré pour émettre une liste de commande (35, 36) et demander une saisie, dans lequel l'ordinateur mobile (6) est conçu et configuré pour traiter des listes de commande de complexité variable afin d'émettre des listes de commande. (35, 36) et dans lequel une complexité d'une liste de commande sélectionnée dépend de l'équipe de service et/ou d'une valeur de la mesure et/ou d'une catégorie du client et/ou de la commande (11).

11. Système (1) selon une des revendications précédentes, dans lequel l'ordinateur de succursale (5) communique des données (8) avec un ordinateur d'administration (7) , qui est conçu et configuré pour alimenter une base de données (9a) dotée d'un système de gestion des commandes contenant des enregistrements (10a) de commandes (11) qui peuvent être traitées par l'ordinateur de succursale (5) et dans lequel l'ordinateur d'administration (7) est conçu et configuré pour analyser un enregistrement de données (10a) de la base de données (9a), contacter un ordinateur de service (60-62), transmettre à l'ordinateur de service (60-62) une commande et demander une date de livraison.

12. Système (1) selon une des revendications précédentes, dans lequel l'ordinateur central (4) et l'ordinateur de gestion (7) sont conçus et configurés pour synchroniser automatiquement, au moins partiellement, les enregistrements de données (10, 10a).

13. Système (1) selon une des revendications précédentes, dans lequel l'ordinateur mobile (6) est conçu et configuré pour reconnaître une structure de surface sur un dispositif de livraison de la structure d'ameublement et pour récupérer en temps réel, depuis un ordinateur de service (60), des données supplémentaires relatives à la structure d'ameublement et à ses composants.

14. Procédé d'exploitation d'un système (1) d'organisation et d'assistance aux entreprises du secteur de l'ameublement pour le traitement des commandes (11) et les mesures connexes (12, 13) relatives au montage, à la livraison et/ou à l'entretien de structures d'ameublement (2), utilisant au moins un ordinateur (3) ou un ordinateur mobile (6) d'un système (1) selon une des revendications précédentes, dans lequel un programme de commande (15) est exécuté sur l'ordinateur mobile (6) et reçoit des informations de commande mises à jour (26) avant toute mesure (12, 13) d'une commande (11) et/ou dans lequel un technicien (46, 47) donne des instructions concernant les étapes à suivre pour la réalisation d'une mesure de la commande (11) et demande automatiquement l'enregistrement des données par le technicien (46, 47) et un groupe de fichiers journaux (40) est créé et dans lequel l'ordinateur mobile (6) effectue automatiquement une synchronisation de données configurable avec l'ordinateur central (4) et dans lequel l'ordinateur central (4) contacte au moins un ordinateur de service (60) d'un fabricant à un intervalle de temps configurable avant l'exécution d'une mesure (12, 13) et récupère les informations de commande mises à jour (26) et les stocke dans l'enregistrement de données (10).
